# EUROPÄISCHE PATENTSCHRIFT

(11) **EP 3 589 800 B1**
(45) Veröffentlichungstag und Bekanntmachung des Hinweises auf die Patenterteilung: **08.09.2021**
(21) Anmeldenummer: 18710793.3
(22) Anmeldetag: 28.02.2018
(51) Int. Cl.: E04G 5/04, E04G 21/32, F16B 7/14, F16B 2/04

(54) **MODULARES HALTESYSTEM UND VERFAHREN ZUM ERZEUGEN EINER KLEMM-/ PRESSSTELLUNG EINES MODULAREN HALTESYSTEMS**
MODULAR RETAINING SYSTEM FOR SECURING ASSEMBLIES AND METHOD TO CREATE A CLAMPING OR PRESSING GRIP USING A RETAINING SYSTEM
SYSTÈME DE SUPPORT MODULAIRE POUR MODULES DE BLOCAGE ET MÉTHODE POUR PRODUIRE UN SERRAGE/PRESSAGE D'UN SYSTÈME DE MAINTIEN MODULAIRE

(30) Priorität: 28.02.2017 DE 102017104157
(43) Veröffentlichungstag der Anmeldung: 08.01.2020
(73) Patentinhaber: Hyprotec GmbH, 08371 Glauchau (DE)
(72) Erfinder: HOVESTÄDT, Kirsten Lydia, 21698 Harsefeld (DE)
(74) Vertreter: Prinz & Partner mbB
(86) Internationale Anmeldenummer: PCT/EP2018/054917
(87) Internationale Veröffentlichungsnummer: WO 2018/158308

(56) Entgegenhaltungen:
- EP-A1- 2 177 690
- FR-A1- 2 974 377
- GB-A- 2 520 163
- US-A- 3 351 311
- US-A- 4 824 302
- US-A1- 2016 340 918
- US-B1- 6 516 821

## Beschreibung

### GEBIET DER ERFINDUNG

Die Erfindung betrifft ein modulares Haltesystem umfassend eine Spannkonsole und ein Anschlagmodul. Ferner betrifft die Erfindung ein Verfahren zum Erzeugen einer Klemmstellung eines modularen Haltesystems, sowie ein Verfahren zum Erzeugen einer Pressstellung eines modularen Haltesystems.

### TECHNISCHER HINTERGRUND

Sicherungsbaugruppen sind im Bau-Handwerk, oder auch allgemein, bei sicherungsbedürftigen handwerklichen Tätigkeiten, von großer Bedeutung, um das Risiko von Sach- und/oder Personenschäden zu minimieren. Zu diesem Zweck sind Anschlagvorrichtungen vorgesehen, die eine Sicherungsbaugruppe mit dem aufnehmenden Körper (Aufnahmekörper) belastbar verbinden. Für verschiedene Anwendungsbereiche gibt es weltweit unterschiedlichste Lösungen, die unterschiedlichen Normen unterliegen, sowohl für die Sicherungsbaugruppenteile als auch für die Aufnahmevorrichtungen. Häufig sind zur Fixierung Bohrungen im Aufnahmekörper erforderlich. Dies führt allerdings zu lokalen Beschädigungen des Aufnahmekörpers.

Gemäß EP 2 177 690 B1 ist eine Haltevorrichtung für eine Sicherungsbaugruppe bekannt, wobei eine zwingenartige Klemmeinheit genutzt wird. Die Fixierung der Klemmeinheit basiert im Wesentlichen auf der Kombination aus einer hohlen Führungsstange und einem endseitigen Spannprofilteil. Zum Fixieren benötigt man demgemäß Zugang zu beiden Stirnflächen der Führungsstange. Ferner kann nach der Fixierung, auf der Seite des zur Fixierung genutzten endseitigen Spannprofilteils, keine zusätzliche Aufnahme für die Sicherungsbaugruppe mehr hinzugefügt werden, ohne dass die Fixierung wieder vollständig gelöst wird. Des Weiteren können die auf der Führungsstange frei verschiebbaren Profilhülsen, während der Montagephase und bevor sie fixiert wurden, ein Sicherheitsrisiko darstellen. Dieser Aspekt ist von großer Bedeutung, da entsprechende Haltevorrichtungen für Sicherungsbaugruppen oftmals in großer Höhe montiert werden.

US 3 351 311 A offenbart eine Klemme, die einfach und bequem entlang einer Kante eines Bauwerks oder Elements befestigt werden kann und durch die Geländer getragen und so positioniert werden, dass Arbeiter nicht von dem Bauwerk oder Element fallen können.

US 4 824 302 A offenbart eine Vorrichtung, die ein Paar Pole aus rohrförmig konfiguriertem Material mit Saugnäpfen an den distalen Enden umfasst, die in einem engen teleskopischen Verbindungselement angeordnet sind.

US 6 516 821 B1 offenbart eine stufenlose Einstell-/Lokalisierungsvorrichtung derart, dass die Länge eines Stabs stufenlos einstellbar ist. Der Stab besteht aus mehreren teleskopischen Verbindungsrohren. Die Einstell-/Lokalisierungsvorrichtung umfasst ein Schraubelement, das durch eine Gewindestange mit Außengewinde und ein Verriegelungselement gebildet wird, das aus zwei halbzylindrischen Körpern besteht, die mit der Gewindestange zusammenwirken.

GB 2 520 163 offenbart eine Absturzsicherungsvorrichtung, die eine Vielzahl von Paneelen und eine Stützeinrichtung zum Stützen der Paneele umfasst. Die Vorrichtung umfasst eine Montageanordnung auf dem Trägermittel zum Montieren der Paneele darauf.

US 2016/340 918 A1 offenbart eine Klammer, die leicht und schnell an Planken wie solchen in einer Gerüstplattform angebracht werden kann, um eine Plattform in einer Gerüststruktur zu definieren. Die Klammer weist ein einstellbares Teleskoprohr auf, mit dem die Klammer einstellbar ist, die auf einer Anzahl verschiedener Gerüstrahmenbreiten verwendet werden kann. Die Feineinstellung der Klemmbreite erfolgt über eine mit Gewinde versehene Klemmmutter.

FR 2 974 377 A1 offenbart eine Vorrichtung, die eine erste Komponente aufweist, die ein rechteckiges Rohr mit einem nicht durchstochenen Teil und einem durchstochenen Teil mit Öffnungen aufweist. Eine zweite Komponente umfasst eine Platte, die eine Ebene definiert, in der die Platte an einem rohrförmigen Trägerelement befestigt ist.

### ZUSAMMENFASSUNG

Es ist ein Aufgabe der Erfindung, die Nachteile der bekannten modularen Haltesysteme auszuräumen.

Gemäß der Erfindung, werden die folgenden Vorrichtungen und Verfahren bereitgestellt:
- ein modulares Haltesystem nach Patentanspruch 1, das wenigstens eine Spannkonsole und ein Anschlagmodul umfasst,
- ein Verfahren zum Erzeugen einer Klemmstellung eines modularen Haltesystems gemäß Patentanspruch 12, und
- ein Verfahren zum Erzeugen einer Pressstellung eines modularen Haltesystems gemäß Patentanspruch 13.

Es wird somit unter anderem ein modulares Haltesystem gemäß Patentanspruch 1 für Sicherungsbaugruppen bereitgestellt, das variabel sowohl in Bezug auf den Aufnahmekörper, bzw. dessen Aufnahmeflächen, als auch variabel in Bezug auf Sicherungsbaugruppenteile unterschiedlicher Normen einsetzbar ist. Das Haltesystem nutzt vorteilhafte Materialeigenschaften und spart Gewicht und Kosten ein.

Eine Fixierung des modularen Haltesystems gegenüber dem Aufnahmekörper wird durch das Zusammenwirken einer Spannkonsole mit zwei Anschlagmodulen erreicht. Die Spannkonsole umfasst zwei außenliegende Deckelhülsen. Die Anschlagmodule weisen Steckführung für die Spannkonsole auf, wobei die Steckführungen an ihren Außenseiten Federriegel aufweisen. Durch ein Zusammenwirken der Federriegel und der Deckelhülsen kann die Spannkonsole gegenüber den Anschlagmodulen arretiert werden. Durch zwei Spindelschrauben, die an den Stirnflächen der Deckelhülsen montiert sind, sind dann die Deckelhülsen mit den arretierten Anschlagmodulen gegeneinander verfahrbar. Ist die mögliche Längenänderung der Spannkonsole ausreichend, ist eine Klemm- bzw. Pressstellung der Anschlagmodule an geeigneten Aufnahmeflächen des Aufnahmekörpers erzielbar. Mittels der Spindelschrauben kann die zwischen den Anschlagmodulen und dem Aufnahmekörper entstehende Druckkraft erhöht werden, um das modulare Haltesystem gegenüber dem Aufnahmekörper zu fixieren.

Gemäß der Erfindung umfasst die Spannkonsole ein Innenelement, eine erste und eine zweite Deckelhülse und zwei Spindelschrauben. Die Spindelschrauben sind an entlang einer Längserstreckungsachse gegenüberliegenden Enden der Spannkonsole koaxial zur Längserstreckungsachse positioniert. Durch eine Rotation einer Spindelschraube ist eine Relativbewegung der jeweiligen Deckelhülsen gegenüber dem Innenelement, entlang der Längserstreckungsachse der Spannkonsole, ausführbar. Dadurch wird eine Gesamtlänge der Spannkonsole verändert.

Gemäß einem vorteilhaften Aspekt kann die jeweilige Spindelschraube am jeweiligen Ende der Spannkonsole mit der Stirnseite der Deckelhülse in drehbarer Weise verbunden werden. Das kann mittels eines Freistichs im Gewinde der Schraube und einem passenden Sicherungsring realisiert werden. Eine Rotation einer Spindelschraube kann, aufgrund dieser Art der Verbindung, zu einer Relativbewegung des Verbunds aus jeweiliger Spindelschraube und Deckelhülse gegenüber dem Innenelement führen. Die Gewindelänge der Spindelschraube kann vorteilhaft mehr als 10 mm betragen. Weiter vorteilhaft kann die Gewindelänge der Spindelschrauben 125 mm betragen.

Gemäß einem weiteren vorteilhaften Aspekt kann das Innenelement zwei Spindelbuchsen umfassen, die koaxial einer Längserstreckungsachse des Innenelements an gegenüberliegenden Enden des Innenelements angeordnet sind. Das Innenelement kann eine Aussparung umfassen, die ein Gewinde aufweist. In dieses Gewinde können die Spindelbuchsen geschraubt sein. Die Spindelbuchse kann eine Länge von vorteilhaft mehr als 20 mm aufweisen. Die Länge der Spindelbuchse kann weiter vorteilhaft 150 mm betragen.

Auf vorteilhafte Weise können die Spindelbuchsen zusätzlich mit dem Innenelement verklebt sein. Auch können die Spindelbuchsen durch jeweils einen Spannbolzen gesichert sein. Die Spindelbuchsen können jeweils Innengewinde umfassen, in das die Spindelschrauben geschraubt sein können. Da die Spindelschrauben mit den Stirnseiten der Deckelhülsen drehbar verbunden sein können, kann somit eine Relativbewegung der Deckelhülsen gegenüber dem Innenelement auf besonders vorteilhafte Weise ausführbar sein.

Die Spindelschrauben weisen beide dieselbe Funktionalität auf. Die Spindelschrauben bewirken beide durch Rotation in entsprechender Weise eine Relativbewegung der jeweiligen Deckelhülse gegenüber dem Innenelement, bzw. gegenüber der anderen Deckelhülse. Somit wird die Handhabung des Haltesystems auf vorteilhafte Weise erleichtert, sogar für den Fall, dass eine Spindelschraube durch die Eigenschaften des Aufnahmekörpers unzugänglich ist.

Gemäß einem weiteren vorteilhaften Aspekt kann die Längenänderung der Spannkonsole, die durch eine Relativbewegung der Deckelhülsen gegenüber dem Innenelement hervorgerufen wird, begrenzt sein. Zu diesem Zweck kann das Innenelement zwei Sicherungselemente umfassen, beispielsweise hervorstehende Schrauben oder kragenartige Aufsätze. Die Deckelhülsen können komplementäre Sicherungselemente umfassen. Auf vorteilhafte Weise können die Sicherungselemente zusammenwirken und die Gesamtlänge der Spannkonsole limitieren. Die mögliche Längenänderung der Spannkonsole kann vorteilhaft mehr als 20 mm betragen. Demzufolge kann die Spannkonsole entsprechend der Rotation der Spindelschrauben eine minimale und eine maximale Gesamtlänge aufweisen, wobei sowohl die minimale als auch die maximale Gesamtlänge begrenzt sein kann. Aus Sicherheitsgründen muss ein Ablösen der Deckelhülse von der Spannkonsole, im Falle einer übermäßigen Rotation der jeweiligen Spindelschraube, unbedingt verhindert werden. Ansonsten ist die Stabilität des gesamten Haltesystems gefährdet.

Gemäß der Erfindung, haben die Seitenflächen der Deckelhülsen Aussparungen. Die Aussparungen dienen dazu, ein Gegenstück aufzunehmen. Somit kann ein Formschluss möglich sein. Die Form der Aussparungen kann kreisrund sein. Dabei können die Flächennormalen der Seitenflächen paarweise orthogonal zueinander und zur Längserstreckungsachse der Spannkonsole orientiert sein.

Auf vorteilhafte Weise kann der Abstand von benachbarten Aussparungen in den Seitenflächen der Deckelhülsen konstant sein. Er kann insbesondere geringer als die Hälfte der möglichen Differenz zwischen minimaler und maximaler Gesamtlänge der Spannkonsole sein. Die Distanz benachbarter Aussparungen kann vorteilhaft mehr als 10 mm betragen. Die Distanz benachbarter Aussparungen kann weiter vorteilhaft 70 mm betragen.

Gemäß einem weiteren vorteilhaften Aspekt können Spannkonsolen unterschiedlicher minimaler Gesamtlänge bereitgestellt werden. Die Spannkonsolen können, bis auf ihre minimale Gesamtlänge, dieselbe Funktionalität und gleichbedeutende sonstige Eigenschaften aufweisen. Somit kann die Fixierung des Haltesystems für unterschiedlich benötigte Spannweiten des Aufnahmekörpers erfolgen. Dies kann die Variabilität erhöhen. Die Spannkonsole kann für das vorliegende Ausführungsbeispiel eine minimale Gesamtlänge von vorteilhaft mehr als 100 mm aufweisen. Weiter vorteilhaft kann die Gesamtlänge der Spannkonsole weniger als 4000 mm betragen. Weiter vorteilhaft kann die Gesamtlänge der Spannkonsole 560 mm betragen. Weitere Ausführungsbeispiele weisen andere minimale Gesamtlängen auf. Demnach kann die Gesamtlänge der Spannkonsole weiter vorteilhaft 910 mm betragen. Weiter vorteilhaft kann die Gesamtlänge der Spannkonsole auch 1120 mm betragen. Die erste Deckelhülse kann eine Gesamtlänge von vorteilhaft mehr als 50 mm aufweisen. Weiter vorteilhaft kann die erste Deckelhülse eine Gesamtlänge von 210 mm aufweisen. Die zweite Deckelhülse kann eine Gesamtlänge von vorteilhaft mehr als 70 mm aufweisen. Weiter vorteilhaft kann die zweite Deckelhülse eine Gesamtlänge von 350 mm aufweisen. Weitere Ausführungsformen der zweiten Deckelhülse weisen abweichende Gesamtlängen auf. Demnach kann die Gesamtlänge der zweiten Deckelhülse weiter vorteilhaft 700 mm betragen. Weiter vorteilhaft kann die Gesamtlänge der zweiten Deckelhülse auch 910 mm betragen.

Gemäß der Erfindung, umfasst ein Anschlagmodul eine Hauptanpressfläche, eine erste Steckführung und zumindest einen Federriegel. Die Hauptanpressfläche ist zur Benutzung mit einer geeigneten Aufnahmefläche des Aufnahmekörpers vorgesehen. Die Steckführung ist geeignet eine Spannkonsole aufzunehmen, wobei die Längsachse der Steckführung senkrecht zur Hauptanpressfläche des Anschlagmoduls orientiert ist. Die Öffnungsfläche der Steckführung entspricht deshalb auf vorteilhafte Weise näherungsweise der Querschnittskontur der Spannkonsole. Der Federriegel ist an einer Außenwand der Steckführung montiert. Der Federriegel umfasst einen mittels einer Feder gelagerten Bolzen, der in Normalstellung der Feder in die Öffnungsfläche der Steckführung hineinragt. Die Länge des Anschlagmoduls kann vorteilhaft mehr als 30 mm betragen. Die Länge der Anschlagmodule kann weiter vorteilhaft 250 mm betragen.

Gemäß einem vorteilhaften Aspekt kann der Federriegel durch eine Schraubverbindung form- und kraftschlüssig an einer Außenwand der Steckführung montiert sein. Auf vorteilhafte Weise kann der Federriegel so ausgerichtet sein, dass seine Längsachse orthogonal auf der Außenwand der Steckführung orientiert ist.

Gemäß einem weiteren vorteilhaften Aspekt kann die Hauptanpressfläche des Anschlagmoduls ein Pufferelement aufweisen. Das Pufferelement kann elastisch verformbar sein und Unebenheiten der Aufnahmeflächen ausgleichen können. Somit kann auf vorteilhafte Weise eine über die Hauptanpressfläche gleichmäßige Kraftverteilung erreichbar sein. Die Aufnahmekörper können stark variieren, und beispielsweise aus Holz, Beton, oder Stahl bestehen. Diese Oberflächen können mitunter Unebenheiten und/oder Welligkeiten aufweisen, die eine flächenmäßige Fixierung des Haltesystems an dem jeweiligen Aufnahmekörper nachteilig beeinflussen können.

Gemäß einem weiteren vorteilhaften Aspekt kann das Anschlagmodul eine Vertiefung umfassen, die sich an die Hauptanpressfläche anschließen kann. Die Vertiefung kann im Wesentlichen aus zwei Wandflächen bestehen, wobei deren Distanz, mit einem bezüglich der Ebene der Hauptanpressfläche zunehmendem Abstand, geringer werden kann. Somit kann eine Verjüngung ausgebildet werden.

Die Aufnahmekörper können auch Stahlprofilteile umfassen. Um das modulare Haltesystem an einem Stahlprofilteil fixieren zu können, kann die Verjüngung genutzt werden. Das Anschlagmodul kann dann so ausgerichtet werden, dass das Stahlprofilteil in die Verjüngung greifen kann. Somit kann auf vorteilhafte Weise ein näherungsweiser Formschluss möglich sein. Eine der beiden Wandflächen der Verjüngung kann auf besonders vorteilhafte Weise orthogonal zur Hauptanpressfläche ausgerichtet sein. Dann kann mittels einer Wandfläche, die parallel zu einer der Außenflächen des Stahlprofilteils ausgerichtet sein kann, der Formschluss vorteilhaft ausgestaltet sein.

Gemäß einem weiteren vorteilhaften Aspekt kann ein Anschlagmodul eine zusätzliche Steckführung und ebenso einen zusätzlichen Federriegel an zumindest einer Außenwand der zusätzlichen Steckführung aufweisen. Die Längsachse der zusätzlichen Steckführung des Anschlagmoduls kann eine von der Längsachse der ersten Steckführung variierende Ausrichtung aufweisen. Somit kann auf vorteilhafte Weise ein Haltesystem in mehrere Dimensionen erweiterbar sein. Auf vorteilhafte Weise, kann nach diesem Prinzip selbst für komplexe Anordnungen eine sichere Klemm- bzw. Pressstellung am Aufnahmekörper gewährleistet sein.

Gemäß einem weiteren vorteilhaften Aspekt kann das Anschlagmodul einen Anschlagpunkt zur Absturzsicherung von Personen umfassen. Der Anschlagpunkt kann direkt im Anschlagmodul integriert sein. Somit kann diese Art der Sicherung widerstandsfähig, selbst unter extremen Belastungen, sein. Maßnahmen an einem Aufnahmekörper können häufig auch das Bedürfnis umfassen, ausführende Personen mittels einer Absturzsicherung schützen zu können. An dem Anschlagpunkt kann sich eine Person auf vorteilhafte Weise sichern, beispielsweise mittels eines Karabinerhakens und eines Sicherungsseils.

Gemäß einem weiteren vorteilhaften Aspekt kann das Anschlagmodul eine kammerartige Grundstruktur aufweisen. Dadurch kann in vorteilhafter Weise eine Gewichtsersparnis gegenüber einer Vollmaterialausführung erzielt werden. Durch Zwischenwände kann die strukturelle Stabilität des Anschlagmoduls gewährleistet sein. Die Wandstärke des Anschlagmoduls kann vorteilhaft mehr als 2 mm betragen. Die Wandstärke des Anschlagmoduls kann weiter vorteilhaft 4 mm betragen.

Gemäß einem weiteren vorteilhaften Aspekt kann das Anschlagmodul ein Fachwerk umfassen. Das Fachwerk kann sich, von der Ebene der Hauptanpressfläche aus gesehen, an die Verjüngung anschließen. Das Fachwerk kann ein Abschnitt der Gehäusestruktur des Anschlagmoduls sein, der durch zusätzliche Zwischenwände gebildet werden kann. Eine lokal auftretende Kraft, hervorgerufen beispielsweise durch eine Klemm- bzw. Pressstellung an einem Stahlprofilteil, kann durch das Fachwerk dann in vorteilhafter Weise auf den Gesamtkörper des Anschlagmoduls verteilt sein. Somit kann das Fachwerk die strukturelle Stabilität des Anschlagmoduls in vorteilhafter Weise verbessern. Die Wandstärke für die Zwischenwände des Fachwerks kann vorteilhaft mehr als 1,5 mm betragen. Die Wandstärke der Zwischenwände des Fachwerks kann weiter vorteilhaft 3 mm betragen.

Ein Rohradapter ist hier offenbart, ist aber nicht Teil der vorliegenden Erfindung. Der Rohradapter für ein modulares System umfasst zwei Steckführungen, eine in einem Querschnitt im Wesentlichen kreisförmige Aussparung und wenigstens zwei Federriegel. Von den Federriegeln ist jeweils wenigstens einer an einer Außenwand beider Steckführungen positioniert, wobei ein Bolzen des jeweiligen Federriegels in einen Innenraum der jeweiligen Steckführung und damit auch in einen Innenraum der im Querschnitt im Wesentlichen kreisförmigen Aussparung bewegbar ist.

Gemäß einem vorteilhaften Aspekt kann eine Längsachse der im Querschnitt im Wesentlichen kreisförmigen Aussparung mit einer Längserstreckungsachse des Rohradapters übereinstimmen. Zudem kann sich die im Querschnitt im Wesentlichen kreisförmige Aussparung über die gesamte Länge des Rohradapters erstrecken.

Die Steckführungen können durch Aussparungen in sich gegenüberliegenden Seitenflächen des Rohradapters gebildet sein. Die Längsachse der ersten Steckführung kann orthogonal zu der Längsachse der im Querschnitt im Wesentlichen kreisförmigen Aussparung orientiert sein. Die Längsachse der zweiten Steckführung kann sowohl mit der Längsachse der ersten Steckführung, als auch mit der Längsachse der im Querschnitt im Wesentlichen kreisförmigen Aussparung, in einer Ebene liegen. Die Längsachse der zweiten Steckführung kann, sowohl mit der Längsachse der ersten Steckführung als auch mit der Längsachse der im Wesentlichen kreisförmigen Aussparung, weiter vorteilhaft einen 45° Winkel einschließen.

Auf vorteilhafte Weise kann der Rohradapter die Aufnahme eines Sicherungsbaugruppen-Rundrohrs innerhalb der im Querschnitt im Wesentlichen kreisförmigen Aussparung ermöglichen. Das Sicherungsbaugruppen-Rundrohr kann durch die Federriegel an dem modularen Haltesystem fixiert sein.

Gemäß einem weiteren vorteilhaften Aspekt kann ein Adapterelement in die im Querschnitt im Wesentlichen kreisförmige Aussparung des Rohradapters eingeführt sein. Dadurch kann der effektive Durchmesser der im Querschnitt im Wesentlichen kreisförmigen Aussparung verringert sein. Mit dem Adapterelement kann der Rohradapter auf vorteilhafte Weise auf Rundrohre verschiedener Dimensionen angepasst sein.

Gemäß der Erfindung umfasst das modulare Haltesystem eine Spannkonsole und wenigstens ein Anschlagmodul. Die Spannkonsole wird in die Steckführung eines Anschlagmoduls eingeführt, wenn die Federriegel der Steckführung zurückgezogen sind. Die Spannkonsole wird anschließend mittels der Bolzen der Federriegel, die in Aussparungen der Seitenflächen der jeweiligen Deckelhülse greifen, arretiert. Durch diesen Mechanismus kann die Position der Spannkonsole relativ zu dem Anschlagmodul und dessen Hauptanpressfläche auf vorteilhafte Weise festgelegt sein.

Gemäß einem weiteren vorteilhaften Aspekt kann eine Arretierung der Spannkonsole auch an zwei Anschlagmodulen erfolgen. Zu diesem Zweck können für den zuvor beschriebenen Arretierungsmechanismus jeweils eine Deckelhülse der Spannkonsole und eine Steckführung des jeweiligen Anschlagmoduls verwendet werden. Anschließend kann anhand einer Rotation einer der Spindelschrauben dann eine Relativbewegung des einen Anschlagmoduls, das an der ersten Deckelhülse arretiert sein kann, gegenüber dem anderen, das an der zweiten Deckelhülse arretiert sein kann, hervorgerufen werden.

Sollten die Anschlagmodule in geeigneter Weise Kontakt zu Aufnahmeflächen des Aufnahmekörpers aufweisen, kann somit eine Druckkraft zwischen den beiden Anschlagmodulen und dem Aufnahmekörper verursacht werden. Dies kann auf besonders vorteilhafte Weise eine form- und kraftschlüssige Fixierung des Gesamtsystems gegenüber dem Aufnahmekörper zur Folge haben. Eine ausreichende Fixierung kann bei diesem Mechanismus durch das Drehmoment gewährleistet sein, mit dem die Spindelschrauben angezogen werden. Dieses Drehmoment kann vorteilhaft größer als ein Sicherheits-Drehmoment sein. Das Sicherheits-Drehmoment kann vorteilhaft mehr als 20 Nm betragen. Das Sicherheits-Drehmoment kann weiter vorteilhaft 80 Nm betragen.

Gemäß der Erfindung wird das modulare Haltesystem zum Erzeugen einer Klemm- bzw. einer Pressstellung verwendet. Für eine Klemmstellung, um geeignete Aufnahmeflächen des Aufnahmekörpers herum, sind die Hauptanpressflächen der zwei beteiligten Anschlagmodule aufeinander zu gerichtet. Die Steckführungen der Anschlagmodule sind in Flucht ausgerichtet. Die Spannkonsole wird anschließend mittels der Rotation der Spindelschrauben auf die maximal mögliche Gesamtlänge verlängert. Die Spannkonsole wird danach an beiden Anschlagmodulen mittels der Federriegel derart arretiert, dass die maximal mögliche Längenänderung der Spannkonsole größer ist als eine Längenänderung der Spannkonsole, die zum Erzeugen der Klemmstellung benötigt wird. Anschließend werden die Spindelschrauben rotiert und der Abstand der Hauptanpressflächen verringert, bis eine form- und kraftschlüssige Fixierung des modularen Haltesystems gegenüber dem Aufnahmekörper die Folge ist, und eine Klemmstellung erreicht ist.

Für eine Pressstellung, zwischen geeigneten Aufnahmeflächen des Aufnahmekörpers, sind die Hauptanpressflächen der zwei beteiligten Anschlagmodule voneinander weg gerichtet. Die Steckführungen der Anschlagmodule sind in Flucht ausgerichtet. Die Spannkonsole wird anschließend mittels der Rotation der Spindelschrauben auf die minimal mögliche Gesamtlänge verkürzt. Die Spannkonsole wird danach an beiden Anschlagmodulen mittels der Federriegel derart arretiert, dass die maximal mögliche Längenänderung der Spannkonsole größer ist als eine zum Erzeugen der Pressstellung benötigte Längenänderung der Spannkonsole. Anschließend werden die Spindelschrauben rotiert und der Abstand der Hauptanpressflächen vergrößert, bis eine form- und kraftschlüssige Fixierung des modularen Haltesystems gegenüber dem Aufnahmekörper die Folge ist, und eine Pressstellung erreicht ist.

Gemäß einem weiteren vorteilhaften Aspekt können die Spannkonsole, das Anschlagmodul und der Rohradapter im Wesentlichen aus einer Aluminium-basierten Legierung bestehen. Verglichen mit Stahl, kann die Verwendung einer Aluminium-basierten Bauweise bei ähnlichen, oder teilweise sogar besseren Struktureigenschaften, wie beispielsweise Formbarkeit oder Korrosionsbeständigkeit, zu einer signifikanten Gewichtsersparnis führen. Dies kann gleichbedeutend mit einer Effizienzsteigerung und mit Kosteneinsparungen sein.

### KURZE BESCHREIBUNG DER ZEICHNUNGEN

Weitere vorteilhafte Aspekte ergeben sich aus der folgenden Beschreibung bevorzugter Ausführungsbeispiele unter Bezugnahme auf die Zeichnungen, dabei ist:
- FIG.1 eine vereinfachte perspektivische Darstellung einer Spannkonsole im verlängerten Zustand mit maximaler Gesamtlänge gemäß der Erfindung,
- FIG. 2 eine perspektivische Darstellung einer Explosionsansicht einer Deckelhülse gemäß einer ersten Ausführungsform,
- FIG. 3 eine schematische Darstellung des Innenelements mit Blick auf eine der beiden Stirnflächen,
- FIG. 4 eine perspektivische Darstellung einer Explosionsansicht des Innenelements gemäß einer ersten Ausführungsform,
- FIG. 5 eine perspektivische Darstellung eines Anschlagmoduls gemäß der Erfindung,
- FIG. 6 eine schematische Darstellung dieser Ausführungsform des Anschlagmoduls mit Blick auf eine der Stirnflächen,
- FIG. 7 eine perspektivische Darstellung eines Anschlagmoduls gemäß einer weiteren Ausführungsform, umfassend eine zusätzliche Steckführung,
- FIG. 8 eine perspektivische Darstellung eines Anschlagmoduls gemäß einer zusätzlichen weiteren Ausführungsform, umfassend eine zusätzliche Steckführung,
- FIG. 9 eine perspektivische Darstellung eines Rohradapters nicht gemäß der Erfindung,
- FIG. 10 eine schematische Darstellung des Rohradapters mit Blick auf eine der beiden Stirnflächen,
- FIG. 11 eine perspektivische Darstellung des modularen Haltesystems umfassend zwei Spannkonsolen und zwei Anschlagmodule in einer Klemmstellung um einen Aufnahmekörper herum, und
- FIG. 12 eine perspektivische Darstellung des modularen Haltesystems in umfassend zwei Spannkonsolen, zwei Anschlagmodule und einen Rohradapter in einer Pressstellung zwischen zwei Stahlprofilteilen,
- FIG. 13 eine perspektivische Darstellung des modularen Haltesystems in einer weiteren Ausführungsform, umfassend zwei Spannkonsolen und zwei Anschlagmodule in einer Klemmstellung unterhalb eines Aufnahmekörpers.

### DETAILLIERTE BESCHREIBUNG DER AUSFÜHRUNGSBEISPIELE

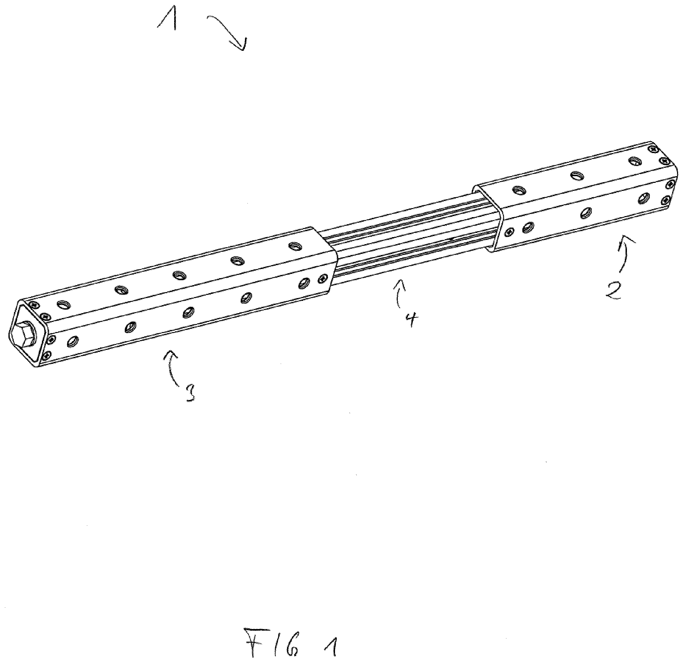

Figur 1 zeigt eine perspektivische Darstellung einer Spannkonsole 1 gemäß der Erfindung. Die Spannkonsole ist hier in ihrem verlängerten Zustand, also dem Zustand mit maximaler Gesamtlänge (minimale Gesamtlänge + maximal mögliche Längenänderung), gezeigt. Die Form der Spannkonsole entspricht im Wesentlichen einem länglichen Quader.

Die Spannkonsole weist für das vorliegende Ausführungsbeispiel eine minimale Gesamtlänge von vorteilhaft mehr als 100 mm auf. Weiter vorteilhaft beträgt die Gesamtlänge der Spannkonsole weniger als 4000 mm. Weiter vorteilhaft kann die Gesamtlänge der Spannkonsole 560 mm betragen. Weitere Ausführungsbeispiele weisen andere minimale Gesamtlängen auf. Demnach kann die Gesamtlänge der Spannkonsole weiter vorteilhaft 910 mm betragen. Weiter vorteilhaft kann die Gesamtlänge der Spannkonsole auch 1120 mm betragen. Die Kantenlänge der Spannkonsole beträgt vorteilhaft mehr als 20 mm. Weiter vorteilhaft kann die Kantenlänge der Spannkonsole 51 mm betragen. Die Kantenlänge verleiht der Spannkonsole ausreichend Stabilität, um den einer Klemm- bzw. Pressstellung zugrundeliegenden Belastungen standhalten zu können.

Die Spannkonsole umfasst im Wesentlichen eine erste Deckelhülse 2, eine zweite Deckelhülse 3 und ein Innenelement 4. Die erste Deckelhülse 2 kann kürzer sein als die zweite Deckelhülse 3. Das Innenelement 4 wird im geschlossenen Zustand, also bei minimaler Gesamtlänge, durch die Deckelhülsen 2, 3 verdeckt. Die erste Deckelhülse 2 weist eine Gesamtlänge von vorteilhaft mehr als 50 mm auf. Weiter vorteilhaft kann die erste Deckelhülse eine Gesamtlänge von 210 mm aufweisen. Die zweite Deckelhülse 3 weist eine Gesamtlänge von vorteilhaft mehr als 70 mm auf. Weiter vorteilhaft kann die zweite Deckelhülse eine Gesamtlänge von 350 mm aufweisen. Weitere Ausführungsformen der zweiten Deckelhülse 3 weisen abweichende Gesamtlängen auf. Demnach kann die Gesamtlänge der zweiten Deckelhülse 3 weiter vorteilhaft 700 mm betragen. Weiter vorteilhaft kann die Gesamtlänge der zweiten Deckelhülse 3 auch 910 mm betragen.

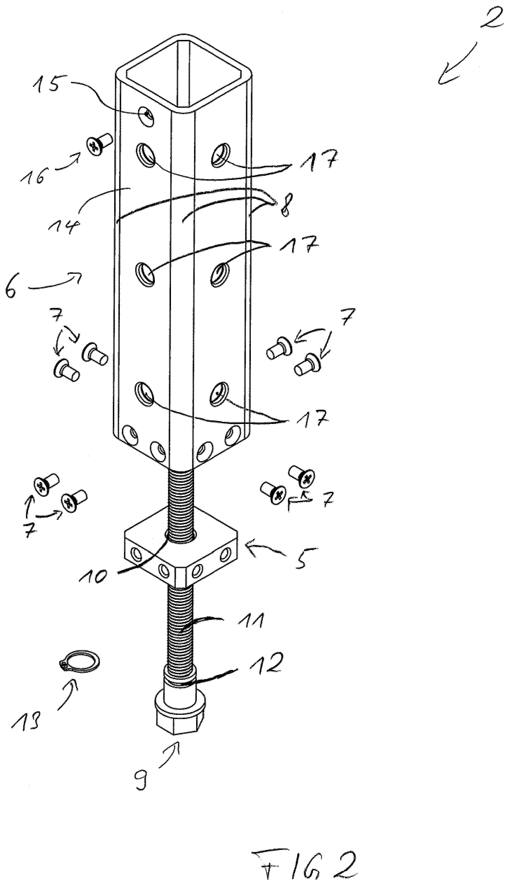

Figur 2 zeigt eine perspektivische Explosionsansicht einer Deckelhülse 2. Abgesehen von der Länge, sind die Deckelhülsen gleichartig konzipiert. Sie bestehen jeweils aus einem Deckel 5, der an der jeweiligen Stirnseite der Spannkonsole positioniert ist, und einer Hülse 6. Die Hülsen umfassen eine quadratische Querschnittskontur mit einer Innen-Kantenlänge von vorteilhaft mehr als 10 mm. Weiter vorteilhaft kann die Innen-Kantenlänge der Hülsen 43 mm betragen. Die Wandstärke der Hülse beträgt vorteilhaft weniger als 15 mm. Weiter vorteilhaft beträgt die Wandstärke der Hülsen mehr als 1 mm. Zudem kann die Wandstärke der Hülsen weiter vorteilhaft 4 mm betragen. Für jede Deckelhülse wird die Hülse durch Schraubverbindungen fest mit dem Deckel verbunden. In Figur 2 sind diesbezüglich acht Senkkopfschrauben 7 am unteren Ende Deckelhülse sichtbar. Die länglichen Kanten 8 der Hülsen sind abgerundet. Das kann die Handhabung erleichtern und das Unfallrisiko mindern.

An den Deckelenden der Deckelhülsen 2, 3 sind die Spindelschrauben 9 drehbar positioniert. Die Spindelschrauben 9 gleichen sich einander in Bezug auf ihre Eigenschaften und Funktionsweise, mit Ausnahme ihrer Ausrichtung. Sie sind einander entgegengesetzt koaxial mit der Längserstreckungsachse der jeweiligen Deckelhülse 2, 3 ausgerichtet.

Im Folgenden werden die Eigenschaften der Spindelschrauben 9 anhand der Spindelschraube 9, die an dem Deckelende der ersten Deckelhülse 2 drehbar positioniert ist, beispielhaft erläutert.

Das Gewinde der Spindelschraube 9 reicht durch eine Durchgangsbohrung 10 des Deckels 5 in den Innenraum der Deckelhülse 2. Bei dem Gewinde der Spindelschraube 9 handelt es sich um ein Trapezgewinde 11. Dieser Gewindetyp weist dickere Gewindegänge auf und ermöglicht somit auf vorteilhafte Weise eine größere axiale Kraftübertragung. Die Gewindelänge der Spindelschraube 9 beträgt vorteilhaft mehr als 10 mm. Weiter vorteilhaft kann die Gewindelänge der Spindelschrauben 125 mm betragen.

Die Spindelschraube 9 umfasst einen Freistich 12. Auf den Freistich 12 kann ein Sicherungsring 13 aufgebracht werden. So kann die Spindelschraube 9 mittels des Sicherungsrings 13 auf der dem Spindelschraubenkopf abgewandten Seite des Deckels 5 gesichert sein. Durch diesen Sicherungsmechanismus ist die Spindelschraube 9 formschlüssig mit der Deckelhülse 2 in drehbarer Weise verbunden.

Als weiteres Merkmal, umfasst die Deckelhülse 2 auf einer Seitenfläche 14 eine weitere Senkbohrung 15 in der Nähe des Deckel-abgewandten Endes. Hier wird ein Sicherungselement 16 in Form einer Senkkopf-Sicherungsschraube montiert. Die Schraubenlänge ist so gewählt, dass die Schraube in den Innenraum der Deckelhülse 2 hineinragt. Allerdings ist sie kurz genug, um einen Kontakt mit dem Innenelement 4 an dessen jeweiliger Seitenfläche zu vermeiden.

Ferner weisen die Hülsen kreisrunde Aussparungen 17 in regelmäßigen Abständen in allen Seitenflächen, mit Ausnahme der Stirnflächen, auf. Die Aussparungen 17 weisen paarweise gleiche Abstände auf. Dabei ist auf vorteilhafte Weise die Distanz benachbarter Aussparungen 17 geringer als die Hälfte der maximal möglichen Längenänderung der Spannkonsole 1. Die Distanz benachbarter Aussparungen 17 beträgt vorteilhaft mehr als 10 mm. Die Distanz benachbarter Aussparungen 17 kann weiter vorteilhaft 70 mm betragen.

Gemäß weiteren Ausführungsformen der Spannkonsole 1 kann die minimale Gesamtlänge der Spannkonsole 1, also die Länge bei geschlossenem Zustand der Spannkonsole, unterschiedlich sein. Dabei ist auf vorteilhafte Weise für sämtliche Ausführungsformen die erste Deckelhülse 2 gleich dimensioniert, was Kosteneinsparungen im Produktionsprozess ermöglicht. Die Länge der jeweiligen komplementären zweiten Deckelhülsen ist unterschiedlich, und zwar abhängig von der gewünschten minimalen Gesamtlänge im geschlossenen Zustand der Spannkonsole. Die Funktionsweise ist für Spannkonsolen unterschiedlicher minimaler Gesamtlänge allerdings gleich.

Gemäß weiteren Ausführungsformen, um beispielsweise spezielle Anforderungen zu erfüllen, ist es denkbar die Spezifikationen der Spannkonsole bzgl. Wandstärken, minimaler Gesamtlänge, Kantenlänge, maximal möglicher Längenänderung, Schrauben-Durchmessern, etc. zu verändern.

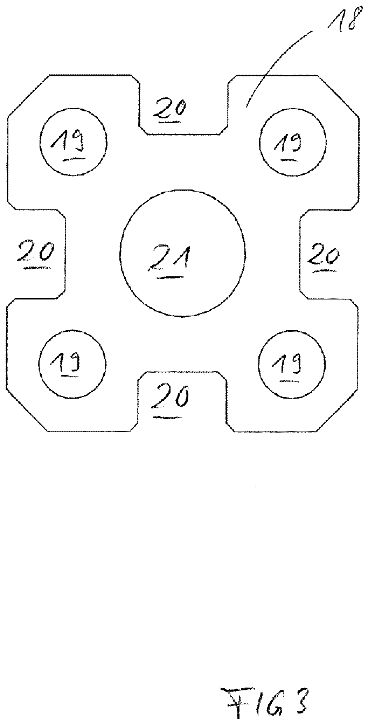

Figur 3 zeigt eine schematische Darstellung der Stirnfläche 18 des Innenelements 4. Entsprechend der Querschnittskontur der Hülsen, umfasst das Innenelement 4 eine näherungsweise quadratische Querschnittskontur. Gemäß dem vorliegenden Ausführungsbeispiel beträgt die Kantenlänge vorteilhaft mehr als 8 mm. Weiter vorteilhaft kann die Kantenlänge des Innenelements 42 mm betragen. Die äußeren Ecken des Innenelements sind abgefast. Somit liegt eine Spielpassung vor, um das Innenelement 4 in den Deckelhülsen 2, 3 montieren zu können. das Innenelement 4 ist gegenüber den Deckelhülsen 2, 3 entlang der Längserstreckungsachse verfahrbar. Jedoch ist das Spiel der Passung nicht so groß, dass die Formschlüssigkeit der sich ineinander bewegenden Elemente nachteilig beeinflusst wird. Verschiedene kreisförmige Aussparungen 19 oder rechteckige Aussparungen 20 vermindern die effektive Querschnittsfläche des Innenelements 4. Diese Aussparungen ermöglichen somit Einsparungen bzgl. der Materialkosten im Produktionsprozess.

Als weiteres Merkmal umfasst das Innenelement 4 eine zentrale kreisrunde Durchgangsbohrung 21. Diese hat einen Durchmesser von vorteilhaft mehr als 5 mm. Der Durchmesser der Durchgangsbohrung 21 kann weiter vorteilhaft 16 mm betragen. In der zentralen kreisrunde Durchgangsbohrung 21 wird an beiden Stirnseiten des Innenelements 4 jeweils eine Spindelbuchse 22 montiert.

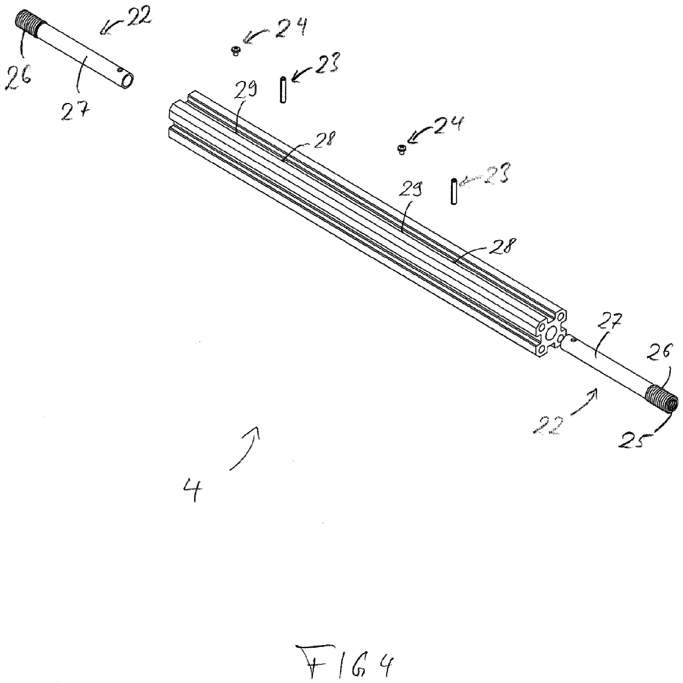

Figur 4 zeigt eine perspektivische Ansicht des Innenelements 4. Es umfasst des Weiteren zwei Spindelbuchsen 22, sowie zwei Spannstifte 23 und zwei Rundkopf-Schrauben oder Gewindestifte 24. Die Spindelbuchse 22 ist von röhrenartiger Form und weist eine Länge von vorteilhaft mehr als 20 mm auf. Die Länge der Spindelbuchse 22 kann weiter vorteilhaft 150 mm betragen. Sie umfasst an einem Ende sowohl ein Innen- als auch ein Außengewinde. Das Innengewinde 25 dient im Zusammenspiel mit der Spindelschraube 9 dem Spindelantrieb. Das Innengewinde ist ein Trapezinnengewinde 25, wobei die Gewindelänge vorteilhaft länger als 10 mm ist. Die Gewindelänge des Trapezinnengewindes kann weiter vorteilhaft 40 mm betragen. Die Spindelbuchse 22 ist im restlichen Bereich der Innenseite auf einen Durchmesser, der größer als der Außendurchmesser des Trapezgewindes ist, ausgebohrt.

Auf der Außenseite umfasst die Spindelbuchse ein Außengewinde 26 auf einer Länge von vorteilhaft mehr als 10 mm. Die Länge des Außengewindes 26 kann weiter vorteilhaft 30 mm betragen. Die Spindelbuchse 22 ist im restlichen Bereich der Außenfläche 27 auf einen Durchmesser, der kleiner als der Innendurchmesser des Außengewindes 26 ist, abgedreht. Mittels dieses Außengewindes 26 wird die jeweilige Spindelbuchse 22, an den beiden gegenüberliegenden Enden des Innenelements 4, in die zentrale kreisrunde Durchgangsbohrung 21 geschraubt. Dabei wird auf einen bündigen Abschluss der Stirnseite der jeweiligen Spindelbuchse 22, an der die Gewinde ansetzen, mit der jeweiligen Stirnseite des Innenelements 4 geachtet.

Zusätzlich ist die jeweilige Außenseite der Spindelbuchse 27, bzw. die Oberfläche der zentralen Durchgangsbohrung 21 des Innenelements 4, mit einem geeigneten Kleber bedeckt. Ferner wird die jeweilige Spindelbuchse 22 gegenüber dem Innenelement 4 durch einen Spannstift 23 gesichert. Zu diesem Zweck wird, in einem Abstand von der jeweiligen Stirnseite des Innenelements 4, eine Durchgangsbohrung 28 entsprechend dem Durchmesser des Spannstifts 23 durch eine der Seitenflächen des Innenelements 4 und durch die jeweilige Spindelbuchse 22 bewerkstelligt. Nach Einspannen des Spannstifts 23 und Aushärten des Klebers sind die Spindelbuchsen 22 bezüglich einer Relativbewegung gegenüber dem Innenelement 4 gesichert. Durch den Spannstift, die Schraubverbindung und die Verklebung wird eine Kraftübertragung auf vorteilhafte Weise durch eine große Übertragungsfläche gewährleistet, wenn die Spindelschraube 9 in das Innengewinde 25 der Spindelbuchse 22 greift und eine Zugkraft verursacht.

Aufgrund des vorgenannten Mechanismus bewirkt die Rotation einer Spindelschraube 9 auf vorteilhafte Weise eine Relativbewegung des Innenelements 4 entlang der Längserstreckungsachse der Spannkonsole 1 gegenüber der Deckelhülse 2, 3 der jeweiligen Spindelschraube 9.

Das Innenelement 4 wird auf vorteilhafte Weise auch für die Limitierung der möglichen Längenänderung der Spannkonsole 1 genutzt. Zu diesem Zweck sind die bereits erwähnten rechteckigen Aussparungen 20, auf sich entsprechend der Querschnittskontur des Innenelements 4 gegenüberliegenden Seitenflächen, von großem Nutzen. In geeigneten Distanzen weist das Innenelement 4 auf einer dieser Seitenflächen angeordnete Bohrungen 29 auf. Die Längsachsen der Bohrungen 29 sind orthogonal zur jeweiligen Seitenfläche orientiert und liegen mit der Längserstreckungsachse des Innenelements 4 in einer Ebene, sind also mittig auf der Seitenfläche positioniert. Diese Bohrungen werden zur Aufnahme von zwei Sicherungselementen 24, in Form von Rundkopf-Sicherungsschrauben oder Gewindestiften, verwendet. Deren Schraubenkopf ist klein genug, um in der rechteckigen Aussparung 20 Platz zu finden. Zudem sind die Schrauben so bemaßt, dass ihr Kopf nicht über die Kantenlänge des Innenelements 4 hinausreicht.

Durch die Schrauben 24 entsteht somit eine Dreiteilung der rechteckigen Aussparung 20 entlang der Längserstreckungsachse. Nach dem Zusammenbau der Spannkonsole 1, ragen die komplementären Sicherungselemente 16 (Senkkopf-Sicherungsschrauben) der Deckelhülsen, mit einem Teil ihres Schraubenkörpers in den durch die Rundkopf-Sicherungsschrauben oder Sicherungs-Gewindestifte 24 definierten Mittelbereich der rechteckigen Aussparung 20. Die Abstände der Bohrungen der Rundkopf-Sicherungsschrauben oder Sicherungs-Gewindestifte 24 sind so gewählt, dass der Abstand zwischen den Hülsen entlang der Längserstreckungsachse der Spannkonsole 1 limitiert ist. Die maximale Gesamtlänge der Spannkonsole 1 ist also begrenzt. Dabei ist die maximal mögliche Relativbewegung gegenüber dem Innenelement 4 für beide Hülsen gleich. Gemäß der vorliegenden Ausführungsform beträgt die mögliche Längenänderung der Spannkonsole 1 vorteilhaft mehr als 20 mm. Die mögliche Längenänderung der Spannkonsole 1 kann weiter vorteilhaft 200 mm betragen. Ein Ablösen der Deckelhülsen 2, 3 von der Spannkonsole 1 wird durch die Blockade mittels der Rundkopf-Sicherungsschrauben oder Sciherungs-Gewindestifte 24 durch diesen Sicherungsmechanismus auf vorteilhafte Weise verhindert. Der Sicherungsmechanismus ist von großer Bedeutung, da, im Falle eines Ablösens einer Deckelhülse, die Stabilität des gesamten Haltesystems gefährdet ist.

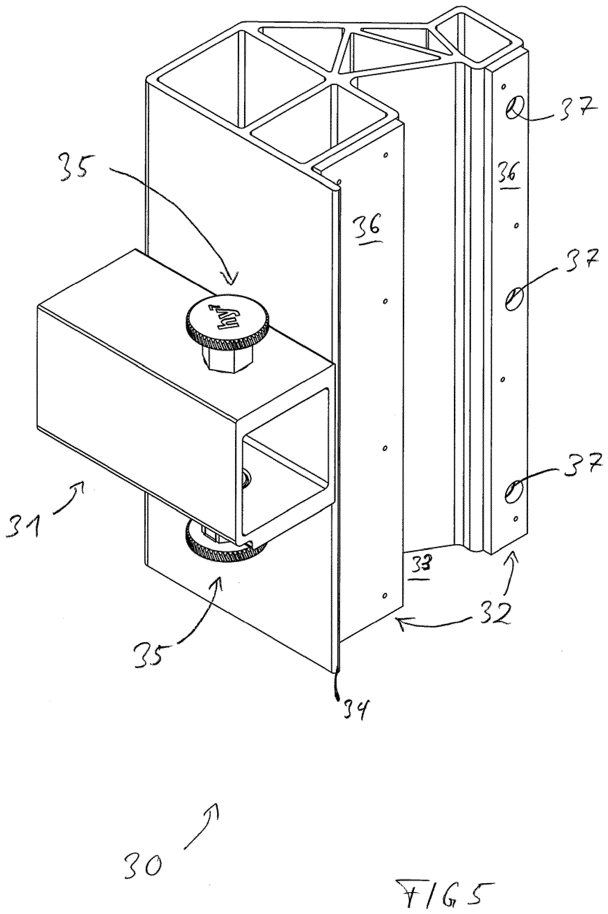

Figur 5 zeigt eine perspektivische Ansicht eines Anschlagmoduls 30 gemäß der Erfindung. Das Anschlagmodul 30 umfasst eine Steckführung 31 zur Aufnahme einer Spannkonsole 1 (im linken Bereich der Darstellung) und eine Hauptanpressfläche 32 (im mittleren und rechten Bereich der Darstellung). Gemäß dieser Ausführungsform ist die Hauptanpressfläche 32 durch eine Vertiefung 33 in zwei Teilflächen, eine erste und eine zweite, unterteilt.

An die Hauptanpressfläche 32 schließt sich eine Absatzkante 34 an. Diese ermöglicht es, das Anschlagmodul 30 an einem Aufnahmekörper, der eine rechtwinklige Kante aufweist, auf vorteilhafte Weise zu positionieren.

An die Absatzkante 34 schließt sich die Steckführung 31 des Anschlagmoduls an. Die Steckführung 31 ist so orientiert, dass ihre Längsachse im Wesentlichen orthogonal auf der Ebene der Hauptanpressfläche 32 steht. Die Steckführung 31 ist bezüglich der Höhe der Hauptanpressfläche 32 im Wesentlichen mittig positioniert. Somit wird auf vorteilhafte Weise eine möglichst gleichförmige Kraftverteilung auf der Hauptanpressfläche 32 gewährleistet.

Die Steckführung 31 umfasst an sich gegenüberliegenden Außenwänden jeweils einen Federriegel 35. Die Federriegel 35 sind normal auf der jeweiligen Außenwand ausgerichtet. Ihre Längsachsen liegen in einer Ebene mit der Längsachse der Steckführung 31.

Ein Gehäuse eines Federriegels 35 umfasst ein Außengewinde. Dieses wird mit einem Innengewinde in der jeweiligen Außenwand der Steckführung 31, entsprechend der spezifizierten Positionen, form- und kraftschlüssig verbunden. Jeder Federriegel 35 umfasst wiederum an dem Ende, das dem Innenraum der Steckführung 31 zugerichtet ist, einen kreisrunden Bolzen. Dieser ist vorzugsweise mittels einer Feder mit dem Gehäuse des Federriegels 35 verbunden. In normaler Stellung ragt dieser Bolzen in den Innenraum der Steckführung 31 hinein und verringert die lichte Weite der Steckführung. Durch Ziehen kann der Federriegel 35 vom Innenraum der Steckführung 31 derart entfernt werden, dass sein Bolzen nicht mehr in den Innenraum ragt. Werden also beide Federriegel 35 gleichzeitig in entgegengesetzte Richtungen gezogen, ist die lichte Weite der Steckführung 31 maximal. Sie entspricht in diesem Fall dem Abstand zwischen den gegenüberliegenden Wänden.

Der Bolzen des Federriegels 35 entspricht in seiner Form grundsätzlich der Form der Aussparungen 17 in den Seitenflächen der Deckelhülsen 2,3. Bezüglich der eingenommenen Flächen liegt eine Spielpassung zwischen dem Bolzen und der Aussparung 17 vor. Für eine praktikable Funktionsweise muss die vom Bolzen eingenommene Fläche zwingend geringer sein als die von der Aussparungen 17 eingenommene Fläche. Für die vorliegende Ausführungsform sind kreisrunde Flächen gewählt. Dabei ist der Durchmesser des Bolzens geringer als der Durchmesser der Aussparung. Dies ermöglicht in vorteilhafter Weise einen Formschluss, wenn der Bolzen in eine Aussparung 17 einrastet. Sollte die Form der Aussparungen 17 nicht wie in der vorliegenden Ausführungsform kreisrund sein, so sollte der Bolzen auf vorteilhafte Weise entsprechend angepasst werden.

Die Form der Öffnung der Steckführung 31 entspricht im Wesentlichen der Form der Spannkonsole 1, die sich durch einen Querschnitt normal zur Längserstreckungsachse im Bereich der Deckelhülsen 2, 3 ergibt. Bezüglich der Flächen, liegt eine Spielpassung zwischen der Steckführung 31 und der Spannkonsole 1 vor. Die lichte Weite der Steckführung 31 ist größer als die von der Spannkonsole 1 normal zur Längserstreckungsachse eingenommenen Querschnittsfläche. Dies ermöglicht es, die Spannkonsole 1 in die Steckführung 31 einzuführen oder sogar hindurchzuführen, sofern die Federriegel 35 in entgegengesetzte Richtungen zurückgezogen werden. Die obengenannte Spielpassung zwischen den Flächen ist so gering, dass die Spannkonsole 1 mit der Steckführung 31 in fünf von sechs Achsen einen Formschluss ausbildet. Ist die Spannkonsole 1 bezüglich ihrer Längserstreckungsachse in geeigneter Position, werden die Federriegel 35 losgelassen. Daraufhin werden die Bolzen mittels der Federwirkung, der in den Federriegeln 35 enthaltenen Federn, auf die Seitenflächen der Deckelhülsen 2, 3 der Spannkonsole 1 gedrückt. Wird die Spannkonsole 1 innerhalb der Steckführung 31 weiter entlang ihrer Längserstreckungsachse verschoben, rasten die Federriegel 35 in entsprechende Aussparungen 17 in den Seitenflächen der Deckelhülsen 2, 3, sobald die Aussparungen 17 in Flucht zu den Federriegeln 35 sind. In diesem Fall ist die Spannkonsole 1 in einer definierten Position bezüglich des Anschlagmoduls 30, bzw. dessen Hauptanpressfläche 32, auf vorteilhafte Weise arretiert. Dieser Mechanismus ist entsprechend anzuwenden, falls das Anschlagmodul 30 eine zusätzliche Steckführung umfasst. Sollte für bestimmte Anwendungen eine geänderte Form der normal zur Längserstreckungsachse eingenommenen Querschnittsfläche der Spannkonsole 1 nötig sein, muss die Steckführung 31 in Form und Größe darauf entsprechend abgestimmt werden.

Die Hauptanpressfläche 32 des Anschlagmoduls 30 umfasst ein Pufferelement 36. Das Pufferelement 36 ist durch versenkte Popnieten an der Hauptanpressfläche 32 montiert. Es ermöglicht einen flächenförmigen Kraftschluss, falls die Aufnahmefläche Unebenheiten aufweist. Solche Unebenheiten können beispielsweise aus variierenden Materialien des Aufnahmekörpers entstehen, die prinzipiell Holz, Beton oder Stahl umfassen können. Oberflächen dieser Materialien weisen verschiedene Welligkeiten, sowie möglicherweise punktuelle oder größere Unebenheiten auf, welche das Pufferelement, das aus einem elastisch verformbaren Material besteht, auszugleichen vermag. Dadurch werden die Hafteigenschaften auf vorteilhafte Weise optimiert. Die vorliegende Ausführungsform umfasst eine zweigeteilte Hauptanpressfläche 32, wobei auf vorteilhafte Weise beide Teilflächen ein Pufferelement 36 umfassen. Die Stärke des Pufferelements 36 kann generell variieren. Sie wird jedoch insbesondere so gewählt, dass das Pufferelement 36 nicht stärker als die Höhe der Absatzkante 34 ist.

Des Weiteren umfasst das Anschlagmodul 30 Durchgangslöcher 37, um eine weitere Montagemöglichkeit des Anschlagmoduls 30 an einem Aufnahmekörper zu ermöglichen. Die Durchgangslöcher 37 liegen im Bereich der Hauptanpressfläche 32, wobei ihre Längsachsen orthogonal zur Hauptanpressfläche 32 orientiert sind. Die Durchgangslöcher 37 sind im Bereich der zweiten Teilfläche der Hauptanpressfläche 32 positioniert. Sie ermöglichen es, das Anschlagmodul 30 auch unter schwierigsten Bedingungen, beispielsweise kopfüber an einer Dachkonstruktion, auf vorteilhafte Weise zu befestigen. Zweckdienlich umfasst auch das Pufferelement 36 Durchgangslöcher, die in Abmessungen und Positionen denen, der Hauptanpressfläche 32, gleichen.

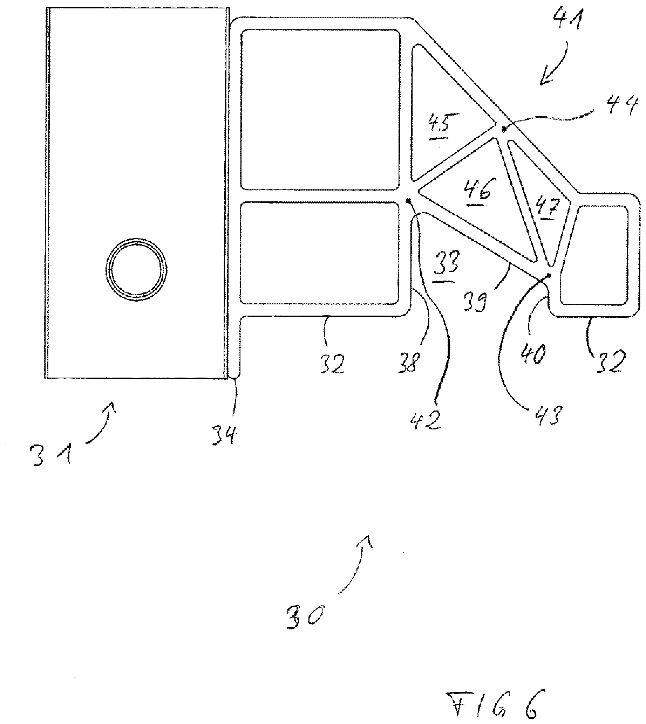

Figur 6 zeigt eine schematische Ansicht auf die Stirnseite des Anschlagmoduls 30. Die Vertiefung 33 besteht aus drei Wandflächen 38 bis 40, wobei sich zwei der Wandflächen 38, 40 jeweils an eine der Teilflächen der Hauptanpressfläche 32 anschließen. Diese zwei Wandflächen 38, 40 sind einander zugerichtet und jeweils orthogonal zu den Teilflächen der Hauptanpressfläche 32 orientiert. Die verbliebene dritte Wandfläche 39 verläuft bezüglich ihres Abstandes zur Ebene der Hauptanpressfläche 32 schräg. Der Abstand zwischen der Ebene der Hauptanpressfläche 32 und der dritten Wandfläche 39 ist, an den Schnittpunkten der dritten Wandfläche 39 mit der ersten Wandfläche 38 und der zweiten Wandfläche 40, unterschiedlich. Vorteilhaft ist der Abstand der dritten Wandfläche zur Ebene der Hauptanpressfläche dort maximal, wo die dritte Wandfläche 39 auf diejenige Wandfläche 38 trifft, die sich an die größere der beiden Teilflächen der Hauptanpressfläche anschließt. Somit bildet die Vertiefung 33 eine Verjüngung aus.

Wird das Anschlagmodul 30 als Teil einer Aufnahmevorrichtung für Sicherungsbaugruppen verwendet, bewirkt eine Klemm- bzw. Pressstellung des Anschlagmoduls eine signifikante Druckkraft, die auf die Hauptanpressfläche 32 wirkt. Das Anschlagmodul 30 muss deshalb verschiedenen Anforderungen gerecht werden. Einerseits muss es generell dieser Druckkraft widerstehen können. Zudem muss das Anschlagmodul 30 eine Struktur aufweisen, die ihm genügend Steifigkeit verleiht, damit es sich unter der Druckkraft nicht verbiegt. Dies ist von besonderer Bedeutung, falls das Anschlagmodul 30 zum Klemmen oder Pressen an einem Stahlprofilteil mittels der Verjüngung 33 der Hauptanpressfläche genutzt wird. In diesem Fall liegt, bezüglich einer Draufsicht auf die Stirnfläche des Anschlagmoduls 30, eine annähernd punktförmige Kraftverteilung am Scheitelpunkt der Verjüngung vor. Deshalb muss das Anschlagmodul 30 so konstruiert sein, dass die Druckkraft auch in diesem Fall effektiv über den Körper des Anschlagmoduls 30 verteilt wird, um die strukturelle Stabilität zu gewährleisten. Andererseits sollen auf die Herstellungskosten möglichst gering gehalten werden. Zu guter Letzt, soll das Gewicht des Anschlagmoduls 30 möglichst gering ausfallen, um eine effiziente Nutzung zu ermöglichen. Um all diese Bedürfnisse zu erfüllen, weist das Anschlagmodul keine Vollmaterialstruktur auf. Vielmehr umfasst die Struktur des Anschlagmoduls 30 ein System mehrerer Kammern (Kammersystem).

Das Kammersystem des Anschlagmoduls 30 wird durch Zwischenwände gebildet. In einer Draufsicht auf eine der Stirnseiten des Anschlagmoduls, entspricht die Form des Kammersystems des Anschlagmoduls 30 näherungsweise einer liegenden "7". An den kurzen Strich anschließend, und parallel dazu orientiert, ist die Steckführung 31 ausgerichtet. Die beiden einzelnen Striche der "7" spiegeln sich im Anschlagmodul durch eine doppelwandige Ausführung wieder. Die Verjüngung zwischen den beiden Strichen der "7" spiegelt näherungsweise die Verjüngung 33 des Anschlagmoduls 30 wieder.

Gemäß der vorliegenden Ausführungsform umfasst die Struktur des Anschlagmoduls 30, im Anschluss an die Verjüngung 33, ein Fachwerk 41. Das Fachwerk 41 wird durch die Zwischenwände auf vorteilhafte Weise gebildet. Die Zwischenwände sind normal zu den Stirnflächen des Anschlagmoduls 30 orientiert und erstrecken sich über die gesamte Länge des Anschlagmoduls 30. Drei der Zwischenwände erstrecken sich, in einer Draufsicht auf die Stirnfläche des Anschlagmoduls, ausgehend vom Scheitelpunkt 42 der Verjüngung, in radialer Richtung bis an die gegenüberliegenden Außenwände. Die restlichen zwei Zwischenwände erstrecken sich, ausgehend vom der Steckführung gegenüberliegenden Ende 43 der Verjüngung, also näherungsweise dem Ende des langen Strichs der "7", ebenfalls in radialer Richtung bis an die gegenüberliegende Außenwand. Zwei der Zwischenwände, jeweils eine ausgehend vom Scheitelpunkt 42 der Verjüngung und eine ausgehend vom der Steckführung gegenüberliegenden Ende 43 der Verjüngung, treffen sich auf halber Länge der gegenüberliegenden Außenwand, also auf halber Länge des langen Strichs der "7". Diese beiden Zwischenwände bilden dort einen Knotenpunkt 44. Zusammen mit den restlichen Zwischenwänden umfasst das Fachwerk 41 durch diese Struktur drei Einzelkammern 45, 46, 47 von dreieckiger Grundform. Diese Einzelkammern schließen sich, von der Hauptanpressfläche 32 aus gesehen, hinter der Verjüngung 33 an. Das Fachwerk 41 ermöglicht eine vorteilhafte Kraftverteilung der Druckkraft über das gesamte Anschlagmodul 30 hinweg, insbesondere wenn das Anschlagmodul 30 zum Klemmen oder Pressen an Stahlprofilteilen mittels der Verjüngung 33 genutzt wird. Je nach Anforderungen, ist es denkbar auch das Fachwerk 41 auf die zugrundeliegenden Bedürfnisse anzupassen.

Für die Stabilität des Anschlagmoduls 30 unter der Belastung einer Klemm- bzw. Pressstellung ist, für eine solche kammerartige Struktur, die Wandstärke von entscheidender Bedeutung. Auch hier gilt es wieder, einen möglichst effizienten Kompromiss zwischen Materialkosten, Gewicht und natürlich der nötigen strukturellen Stabilität zu finden. Daher beträgt die Wandstärke des Anschlagmoduls vorteilhaft mehr als 2 mm. Die Wandstärke des Anschlagmoduls kann weiter vorteilhaft 4 mm betragen. Davon abweichend beträgt die Wandstärke für die Zwischenwände des Fachwerks 41 vorteilhaft mehr als 1,5 mm. Die Wandstärke der Zwischenwände des Fachwerks 41 kann weiter vorteilhaft 3 mm betragen. Für spezielle Anforderungen sind die Wandstärken natürlich, ebenso wie die vorherigen Charakteristika, anpassbar.

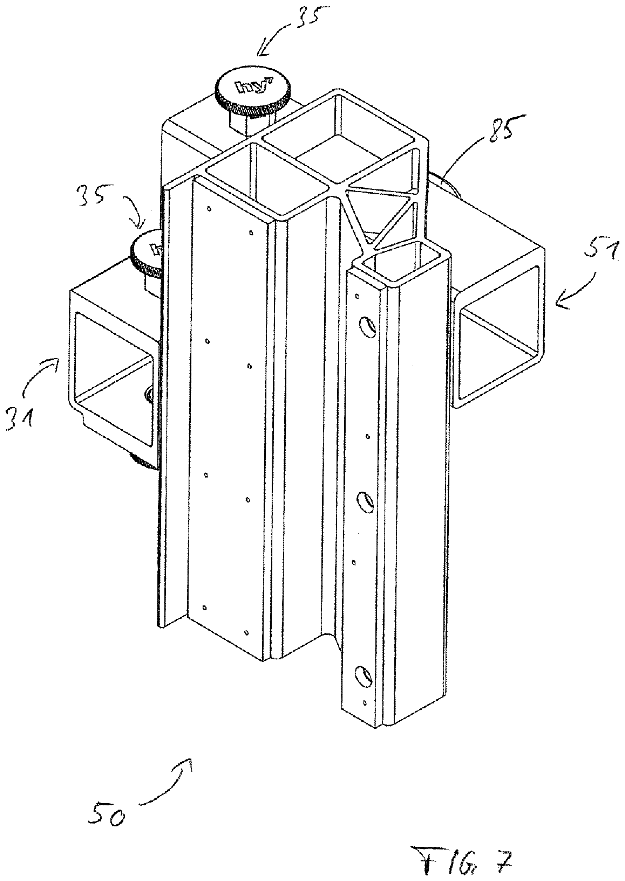

Figur 7 zeigt eine perspektivische Ansicht einer weiteren Ausführungsform des Anschlagmoduls 50. Diese Ausführungsform umfasst eine zweite Steckführung 51 und ermöglicht somit eine erhöhte Variabilität des modularen Haltesystems. Die zusätzliche Steckführung 51 gleicht in ihrer grundsätzlichen Funktionalität und den Abmessungen der ersten Steckführung 31. Allerdings umfasst die zusätzliche Steckführung 51 nur einen Federriegel 35 zur Arretierung einer Spannkonsole 1. Da die zusätzliche Steckführung 51 nicht diejenige ist, welche zum Erzeugen der primären Klemm- bzw. Pressstellung genutzt wird, wirkt sich die verminderte Anzahl der Federriegel 35 nicht nachteilig aus.

Um die Variabilität weiter zu erhöhen, schließt die Längsachse der zusätzlichen Steckführung 51 mit der Längsachse der ersten Steckführung 31 einen Winkel ein. Entsprechend der vorliegenden Ausführungsform 50, stehen die Längsachsen der Steckführungen im Wesentlichen orthogonal zueinander. Für die vorliegende Ausführungsform 50 steht die Längsachse der zusätzlichen Steckführung 51 zudem im Wesentlichen orthogonal zur Längsachse des Anschlagmoduls 50. Das Anschlagmodul 50 beansprucht durch die zusätzliche Steckführung eine vergrößerte Grundfläche. Um diesen Effekt zu verringern, ist die zusätzliche Steckführung 51 auf vorteilhafte Weise teilweise in den Raum der Kammerstruktur des Anschlagmoduls 50 integriert. Obwohl die Struktur des Anschlagmoduls 50 unterbrochen ist, wird die Widerstandsfähigkeit gegen eine auf die Hauptanpressfläche 32 und damit auf das Anschlagmodul 50 wirkende Druckkraft nicht geschwächt. Das Gehäuse der zusätzlichen Steckführung 51 kompensiert den scheinbaren Verlust und verursacht auf vorteilhafte Weise zusätzliche Stabilität.

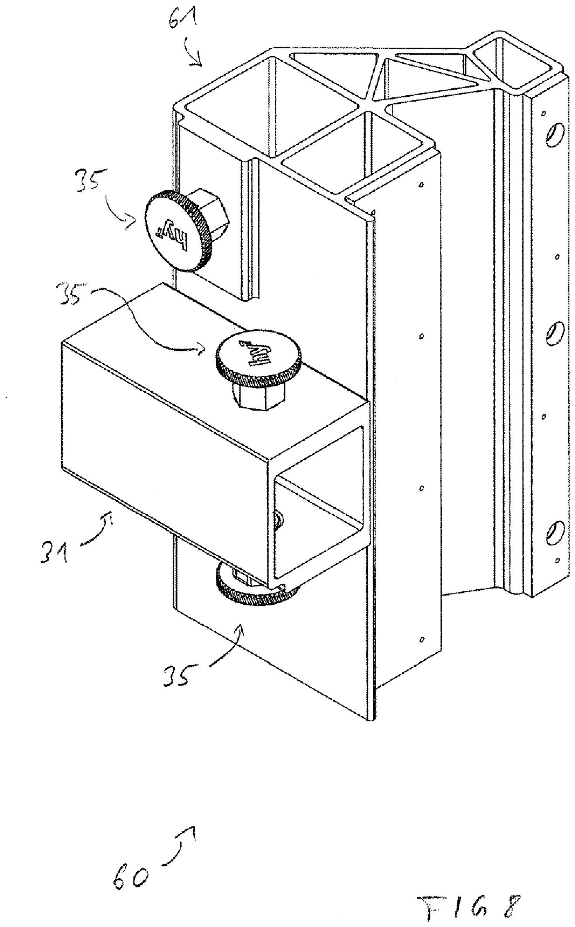

Figur 8 zeigt eine perspektivische Ansicht einer weiteren Ausführungsform des Anschlagmoduls 60. Diese Ausführungsform umfasst, ebenso wie die vorhergehende Ausführungsform, eine zweite Steckführung 61 und ermöglicht somit eine erhöhte Variabilität des modularen Haltesystems. Die Eigenschaften der zusätzlichen Steckführung 61 entsprechen derjenigen der vorhergehenden Ausführungsform 50. Allerdings ist gemäß der vorliegenden Ausführungsform 60 die Längsachse der zusätzlichen Steckführung 61 nicht nur orthogonal zur ersten Steckführung 31 orientiert, sondern auch im Wesentlichen parallel zur Längsachse des Anschlagmoduls 60 ausgerichtet. Um die Grundform des Anschlagmoduls möglichst gering zu halten, wird die größte Kammer der Struktur des Anschlagmoduls 60 als Steckführung verwendet. Somit nimmt die vorliegende Ausführungsform 60, im Vergleich zur eingangs dargestellten Ausführungsform 30, keine größere Grundfläche ein.

Die Anschlagmodule 30, 50, 60 bestehen, mit Ausnahme der Pufferelemente und der Federriegel, im Wesentlichen aus einer Aluminium-Legierung. Gegenüber einer Stahl-basierten Ausführungsweise führt das zu einer signifikanten Gewichtsersparnis bei strukturell vergleichbaren, oder teilweise auch verbesserten Eigenschaften, wie beispielsweise Formbarkeit oder Korrosionsbeständigkeit. Die Materialwahl ermöglicht also eine verringerte Belastung während der Montage und Kosteneinsparungen während des Transports.

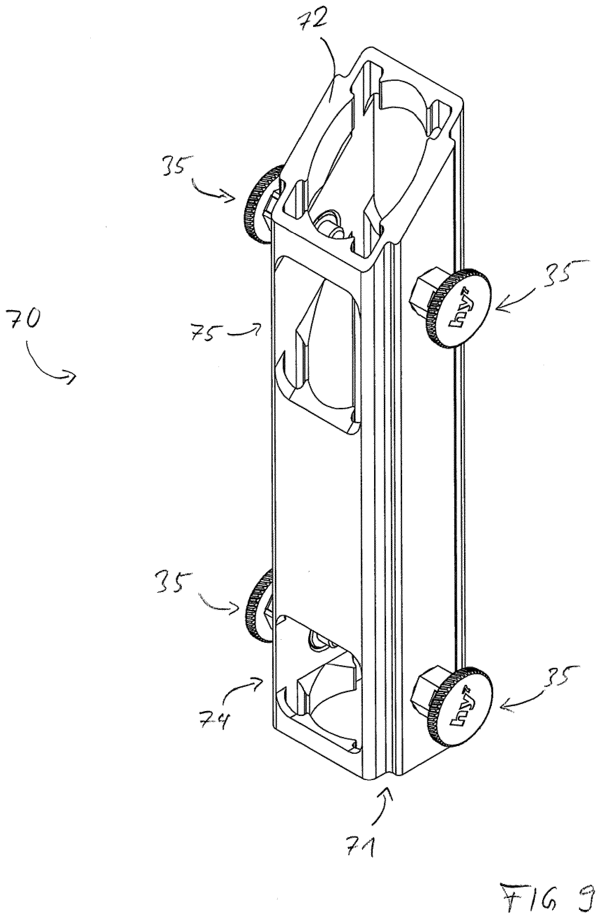

Figur 9 zeigt eine perspektivische Ansicht eines Rohradapters 70. In einer Seitenansicht von rechts, entspricht die Form des Rohradapters einem rechtwinkligen Trapez, in der komplementären Seitenansicht von vorne und der Draufsicht einem Rechteck. Eine Besonderheit der vorliegenden Grundform ist durch die relative Orientierung der Endflächen gegeben. Die erste Endfläche 71 ist normal zur Längserstreckungsachse des Rohradapters orientiert. Im Gegensatz dazu, ist die gegenüberliegende Endfläche 72 schräg gegenüber der Längserstreckungsachse des Rohradapters, und demzufolge auch gegenüber der ersten Endfläche 71, orientiert.

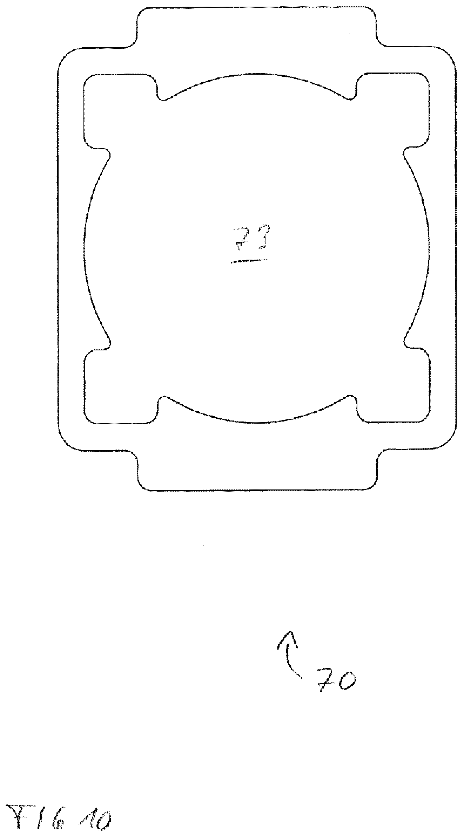

Figur 10 zeigt eine schematische Darstellung einer Ansicht des Rohradapters 70 mit Blick auf eine der Stirnflächen. Demnach umfasst der Rohradapter des Weiteren eine im Querschnitt im Wesentlichen kreisförmige Aussparung 73, deren Längsachse mit der Längserstreckungsachse des Rohradapters 70 übereinstimmt. Die im Querschnitt im Wesentlichen kreisförmige Aussparung umfasst eine zentrale kreisrunde Grundform. Zusätzlich enthält ihre Grundform vier rechteckförmige Elemente, die sich paarweise gegenüberliegen und auf den Flächendiagonalen liegen, die durch die Ecken des Rohradapters 70 entsprechend der Schnittansicht gebildet werden. Die rechteckigen Elemente werden von der kreisrunden Grundform derart geschnitten, dass jeweils eine Ecke jedes rechteckigen Elements in der kreisrunden Grundform liegt. Die jeweiligen durch die kreisrunde Grundform zwei ungeschnittenen Kanten des jeweiligen Rechtecks sind parallel zu den jeweiligen Kanten orientiert, welche die äußere Ecke des Rohradapters bilden, in deren Nähe das jeweilige Rechteck liegt. Die Aussparung 73 erstreckt sich über die komplette Länge des Rohradapters 70.

Des Weiteren umfasst der Rohradapter 70 zwei Steckführungen 74, 75, die für den Einschub einer Spannkonsole dimensioniert sind. Demgemäß entsprechen die Steckführungen 74, 75 bezüglich der Form ihrer Öffnungen und ihrer Abmessungen denjenigen, die Bestandteil der verschiedenen Ausführungsformen des Anschlagmoduls 30, 50, 60 sind.

Gemäß des Rohradapters 70 ist die Längsachse der ersten Steckführung 74 orthogonal zur Längsachse der im Wesentlichen kreisförmigen Aussparung 73 orientiert. Die Längsachse der zweiten Steckführung 75 liegt, sowohl mit der Längsachse der ersten Steckführung 74 als auch mit der Längsachse der im Wesentlichen kreisförmigen Aussparung 73, in einer Ebene. Die Steckführungen werden durch Aussparungen in sich gegenüberliegenden Seitenflächen des Rohradapters gebildet. Die Längsachse der zweiten Steckführung 75 schließt, sowohl mit der Längsachse der ersten Steckführung 74 als auch mit der Längsachse der im Wesentlichen kreisförmigen Aussparung 73, auf vorteilhafte Weise einen spitzen Winkel ein. Die Längsachse der zweiten Steckführung 75 kann, sowohl mit der Längsachse der ersten Steckführung 74 als auch mit der Längsachse der im Wesentlichen kreisförmigen Aussparung 73, weiter vorteilhaft einen 45° Winkel einschließen. Entsprechend der Anforderungen an das modulare Haltesystem, sind andere Ausführungsformen, die eine andere relative Ausrichtung der Längsachsen zueinander umfassen, entsprechend realisierbar.

Die erste Steckführung 74, deren Längsachse orthogonal zur Längsachse des Rohradapters orientiert ist, ist in der Nähe der ersten Endfläche 71 positioniert. Die Steckführung 74 ist auf vorteilhafte Weise so konstruiert, dass sie normal zu einer der Seitenflächen des Rohradapters orientiert ist. Die Steckführung 74 bildet demgemäß eine Durchgangsführung durch den kompletten Rohradapter 70, von einer Seitenfläche zur Gegenüberliegenden, aus.

Die zweite Steckführung 75 ist in der Nähe der zweiten Endfläche 72 positioniert. Sie verläuft schräg durch den kompletten Rohradapter 70 und schneidet dabei dieselben Seiten wie die erste Steckführung 74. Sie ist so konstruiert, dass eine Innenseitenfläche der Steckführung 75 parallel zur abgeschrägten Endfläche 72 des Rohradapters orientiert ist.

Der Rohradapter 70 umfasst, auf den beiden ungeschnittenen und sich gegenüberliegenden Außenflächen, jeweils zwei paarweise angeordnete Aussparungen für Federriegel 35. Die darin zu montierenden Federriegel 35 entsprechen bezüglich Konstruktions- und Funktionsweise denjenigen, die Bestandteil der verschiedenen Ausführungsformen des Anschlagmoduls 30, 50, 60 sind. Die Federriegel 35 sind normal auf der jeweiligen Außenwand ausgerichtet. Ihre Längsachsen liegen paarweise in einer Ebene mit der Längsachse der jeweiligen Steckführung 74, 75.

Ebenso liegt dem Einschieben einer Spannkonsole 1 in eine jeweilige Steckführung 74, 75, bzw. dem Aufschieben eines Rohradapters 70 auf eine Spannkonsole 1, dasselbe Funktionsprinzip zugrunde, wie im Fall des Einführens einer Spannkonsole 1 in eine Steckführung 31 eines Anschlagmoduls 30, 50, 60. Der Rohradapter 70 kann also mittels der Federriegel 35, die in den entsprechenden Aussparungen montiert werden, in einer spezifischen Position bezüglich einer Spannkonsole 1 arretiert werden.

Im Hinblick auf eine Montage eines Sicherungsbaugruppenteils der Sicherungsbaugruppe, beispielsweise eines Sicherungsbaugruppen-Rundrohrs, ermöglicht der Rohradapter 70 einen analogen Arretierungsmechanismus. Die Bolzen der Federriegel 35, die in den seitlichen Aussparungen des Rohradapters 70 montiert werden, reichen nicht nur in die Öffnungsfläche der Steckführungen 74, 75, sondern auch in die Öffnungsfläche der im Wesentlichen kreisförmigen Aussparung 73. Ein zu arretierendes Sicherungsbaugruppen-Rundrohr kann eine Aussparung an einer seitlichen Außenfläche aufweisen, deren Grundfläche größer ist als die Grundfläche des Bolzens des Federriegels 35. Der Arretierungsmechanismus des Sicherungsbaugruppen-Rundrohrs kann dann äquivalent funktionieren. Allerdings ist diese Aussparung grundsätzlich nicht notwendig, da die Spannkonsole 1, an der der Rohradapter 70 montiert wird, als Anschlag für das Sicherungsbaugruppen-Rundrohr dienen kann. Der Rohradapter 70 entsprechend der vorliegenden Ausführungsform eröffnet somit auf vorteilhafte Weise, aufgrund der unterschiedlichen Orientierungen der Längsachsen der Steckführungen 74, 75, vielfältige Möglichkeiten, das Sicherungsbaugruppenteil relativ zur Spannkonsole 1 auszurichten.

Sicherungsbaugruppen sind unterschiedlichen Normen unterworfen. Demzufolge weisen Sicherungsbaugruppenteile, die arretiert werden sollen, oftmals unterschiedliche Abmessungen auf. Die vorliegende Ausführungsform des Rohradapters 70 ist so konzipiert, dass die im Wesentlichen kreisförmige Aussparung 73 Sicherungsbaugruppenteile wenigstens zweier verschiedener Normen aufnehmen kann.

Um eine noch größere Variabilität zu erlangen, kann der Rohradapter 70 gemäß einem weiteren Aspekt auf vorteilhafte Weise um ein Adapterelement erweitert werden. Dieses dient dazu Sicherungsbaugruppenteile verschiedener Normen nutzbar machen, wobei ihre Querschnittsflächen in Form und Größe kleiner sein müssen, als diejenige der im Wesentlichen kreisförmigen Aussparung 73 der vorliegenden Ausführungsform. Um die Variabilität weiter zu erhöhen, sind geänderte Abmessungen des Rohradapters 70 denkbar. So sind auf besonders vorteilhafte Weise auch Sicherungsbaugruppenteile nutzbar, die bezüglich ihrer Querschnittsfläche in Form und Größe von der Querschnittsfläche der im Wesentlichen kreisförmigen Aussparung 73 der vorliegenden Ausführungsform des Rohradapters 70 abweichen.

Die vorliegenden drei verschiedenen Ausführungsformen des Anschlagmoduls 30, 50, 60 ermöglichen es, ein modulares Haltesystem zu errichten, das sich auf vorteilhafte Weise in alle drei Raumrichtungen durch die Benutzung zusätzlicher Spannkonsolen und Anschlagmodule, bzw. Rohradapter, fortsetzen lässt und nahezu beliebig erweiterbar ist.

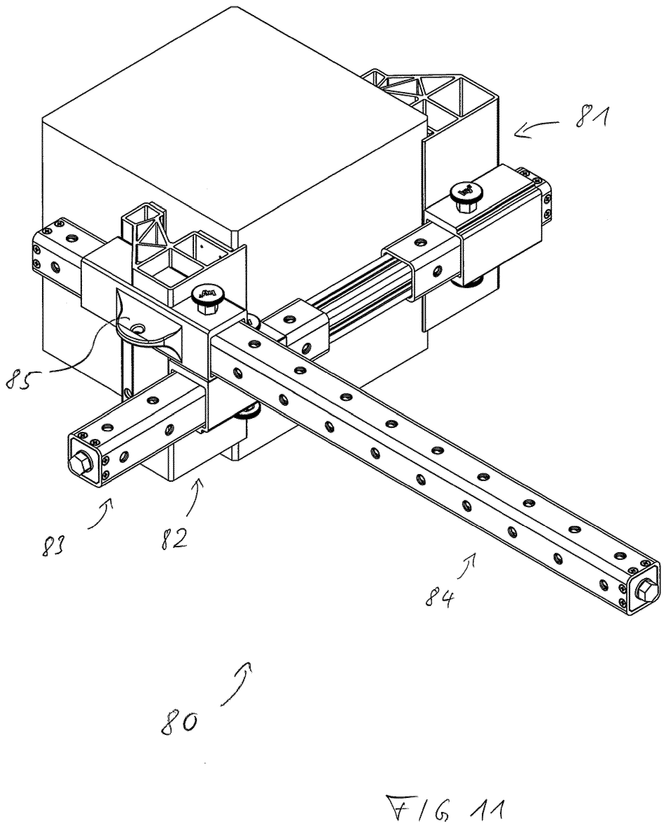

Figur 11 zeigt eine perspektivische Darstellung des modularen Haltesystems gemäß der Erfindung. Es umfasst zwei Anschlagmodule 81, 82 und zwei Spannkonsolen 83, 84.

Das Haltesystem ist in einer Klemmstellung um einen Aufnahmekörper herum fixiert. Für eine Klemmstellung weisen die Hauptanpressflächen der Anschlagmodule 81, 82 aufeinander zu. Zudem sind die jeweils ersten Steckführungen in Flucht zueinander ausgerichtet. Für eine Klemmstellung der Anschlagmodule, ist nun zunächst die Spannkonsole 83 mittels der Rotation der beiden Spindelschrauben auf die maximale Gesamtlänge zu verlängern. Entsprechend dem vorgenannten Mechanismus, wird die Spannkonsole dann in die beiden ersten Steckführungen der Anschlagmodule 81, 82 eingeführt und in geeigneter Stellung mittels der Federriegel arretiert. Eine geeignete Stellung ist dadurch gekennzeichnet, dass die Summe der Distanzen zwischen den jeweiligen Hauptanpressflächen und den jeweiligen ihnen zugerichteten Aufnahmeflächen des Aufnahmekörpers, geringer ist, als die maximal mögliche Längenänderung der Spannkonsole 83. Für die vorliegende Ausführungsform der Spannkonsole 83 beträgt die maximal mögliche Längenänderung vorteilhaft 200 mm. Falls die vorgenannte Bedingung erfüllt wird, bewirkt die geeignete Rotation der Spindelschrauben eine Verringerung der Distanzen zwischen den Hauptanpressflächen und denen ihnen jeweils zugewandten Aufnahmeflächen. Sobald die Distanz derart verringert wird, dass die Hauptanpressflächen beide Kontakt zur jeweiligen Aufnahmefläche des Aufnahmekörpers aufweisen, findet der Übergang in die Klemmstellung des modularen Haltesystems, um den Aufnahmekörper herum, statt.

Ist der Aufnahmekörper in ausreichender Weise verformungsfest, bewirkt das Anziehen der Spindelschrauben eine effektive Druckkraft zwischen den Hauptanpressflächen und den Aufnahmeflächen, die durch den Formschluss zwischen den Bolzen der Federriegel und den Aussparungen der Deckelhülsen der Spannkonsole 83 übertragen wird. Im Weiteren wird die Kraft über die drehbare Verbindung der Deckelhülsen mit den Spindelschrauben an die Spindelschrauben übertragen. Da die Spindelbuchsen fest mit dem Innenelement verbunden sind, muss im Folgenden die Schraubverbindung der Trapezgewinde der Spindelschrauben und der Trapezinnengewinde der Spindelbuchsen dieser Kraft standhalten. Durch die Verformungsfestigkeit der beteiligten Elemente, wird, bei entsprechender Druckkraft, so eine ausreichende Fixierung am Aufnahmekörper gewährleistet.

Um eine ausreichende Fixierung zu gewährleisten, müssen die Spindelschrauben mit einem spezifizierten Sicherheits-Drehmoment *M_{Soll}* angezogen werden. Dieses beträgt für die vorliegende Ausführungsform vorteilhaft mehr als 20 Nm. Das Sicherheits-Drehmoment *Mₛₒₗₗ* beträgt weiter vorteilhaft 80 Nm. Die daraus resultierende Druck- bzw. Haftkraft hängt unter anderem von der Steigung des Trapezgewindes des Spindelantriebs ab. Die resultierenden Hafteigenschaften hängen zudem von der Haftreibung zwischen den Hauptanpressflächen und den Aufnahmeflächen des Aufnahmekörpers ab. Um eine ausreichende Fixierung zu gewährleisten, muss die Hauptanpressfläche deshalb eine Mindestgröße aufweisen. Das hat zur Folge, dass Anforderungen an die Länge der Anschlagmodule 81, 82 gestellt werden. Diese beträgt vorteilhaft mehr als 30 mm. Die Länge der Anschlagmodule kann weiter vorteilhaft 250 mm betragen. Um eine vorteilhafte Fixierung zu ermöglichen, ist zudem das Pufferelement, welches die Hauptanpressflächen umfassen, von wesentlicher Bedeutung. Das Pufferelement besteht aus einem elastisch verformbaren Material. Es kann Unebenheiten und/oder Welligkeiten der Aufnahmeflächen ausgleichen. Dadurch werden vorteilhafte Hafteigenschaften auf verschiedensten Untergründen, wie beispielsweise Holz-, Beton- oder Stahloberflächen, gewährleistet.

Für bestimmte Anforderungen kann es nötig sein, die den Hafteigenschaften zugrundeliegenden Spezifikationen anzupassen. Demgemäß sind entsprechende Ausführungsformen mit Variationen der Größe der Hauptanpressfläche, des Materials des Pufferelements, bzw. dessen Materialstärke, der Länge der Anschlagmodule 81, 82, der Steigung des Gewindes der Spindelschrauben und anderer relevanter Größen denkbar.

Des Weiteren weist die perspektivische Darstellung der vorliegenden Ausführungsform in Figur 11 einige Besonderheiten auf. So entspricht das in der Darstellung rechts befindliche Anschlagmodul 81 der ersten Ausführungsform 30 mit einer einzelnen Steckführung. Bei dem im Bild links befindlichen Anschlagmodul 82 handelt es sich um eine weitere Ausführungsform 50, die eine zusätzliche Steckführung umfasst. Diese wird entsprechend der Figur 11 dazu genutzt, eine zusätzliche Spannkonsole 84 zu arretieren. Es ist denkbar, dass der Aufnahmekörper eine geeignete weitere Aufnahmefläche aufweist, so dass ein zusätzliches Anschlagmodul verwendet werden könnte, um das modulare Haltesystem weiter zu stabilisieren. Eine weitere Nutzungsmöglichkeit der zusätzlichen Spannkonsole 84 ergibt sich, wenn ein Rohradapter 70 genutzt wird. Dieser könnte an der zusätzlichen Spannkonsole 84 arretiert werden und als Aufnahme für ein Sicherungsbaugruppenteil dienen.

Die in Figur 11 gezeigte Ausführungsform umfasst zudem einen Anschlagpunkt 85 zur Absturzsicherung von Personen. Der Anschlagpunkt ist durch einen Flansch, der eine Durchgangsbohrung enthält, innerhalb des in der Darstellung links befindlichen Anschlagmoduls 82 realisiert. Diese Durchgangsbohrung dient der Aufnahme einer Absturzsicherung von Personen für Tätigkeiten während derer gesonderte Schutzmaßnahmen erforderlich sind, beispielsweise Tätigkeiten an einer Außenfassade in großer Höhe. Dadurch dass der Anschlagpunkt 85 zur Absturzsicherung von Personen integral im Gehäuse des Anschlagmoduls 82 implementiert ist, ist der Anschlagpunkt 85 besonders widerstandsfähig, selbst gegenüber extremen Belastungen.

Das modulare Haltesystem ist so konstruiert, dass den beiden Spindelschrauben dieselbe Funktionalität zu Grunde liegt. Das ist von besonderer Bedeutung, falls eine Klemm- bzw. Pressstellung unter schwierigen Bedingungen realisiert werden soll. So kann mitunter eine Spindelschraube durch einen Vorsprung des Aufnahmekörpers unerreichbar sein. Deswegen ist das hohe Maß an Flexibilität besonders vorteilhaft. Ein für eine solche Konfiguration zu beachtender Aspekt ist, dass die Summe der Distanzen zwischen den jeweiligen Hauptanpressflächen und den jeweiligen ihnen zugerichteten Aufnahmeflächen des Aufnahmekörpers, bevor die noch erreichbare Spindelschraube angezogen wird, nur halb so groß wie die maximal mögliche Längenänderung der Spannkonsole 83 sein darf.

Eine Pressstellung des modularen Haltesystems zwischen zwei geeigneten Aufnahmeflächen kann in analoger Weise erzeugt werden. In diesem Fall sind die Hauptanpressflächen voneinander weg orientiert, wobei die ersten Steckführungen des jeweiligen Anschlagmoduls natürlich dennoch in Flucht zueinander ausgerichtet sind. Im Unterschied zur Konfiguration der Klemmstellung, sollte die Spannkonsole zu Beginn des Fixierungsmechanismus geschlossen sein. Nach der Arretierung mittels der Federriegel in geeigneter Stellung, kann dann, durch eine Rotation der Spindelschrauben, eine Verlängerung der Spannkonsole bewirkt werden. Sobald die Hauptanpressflächen der Anschlagmodule Kontakt mit den entsprechenden Aufnahmeflächen des Aufnahmekörpers aufweisen, findet wiederum der Übergang in eine Pressstellung des modularen Haltesystems statt.

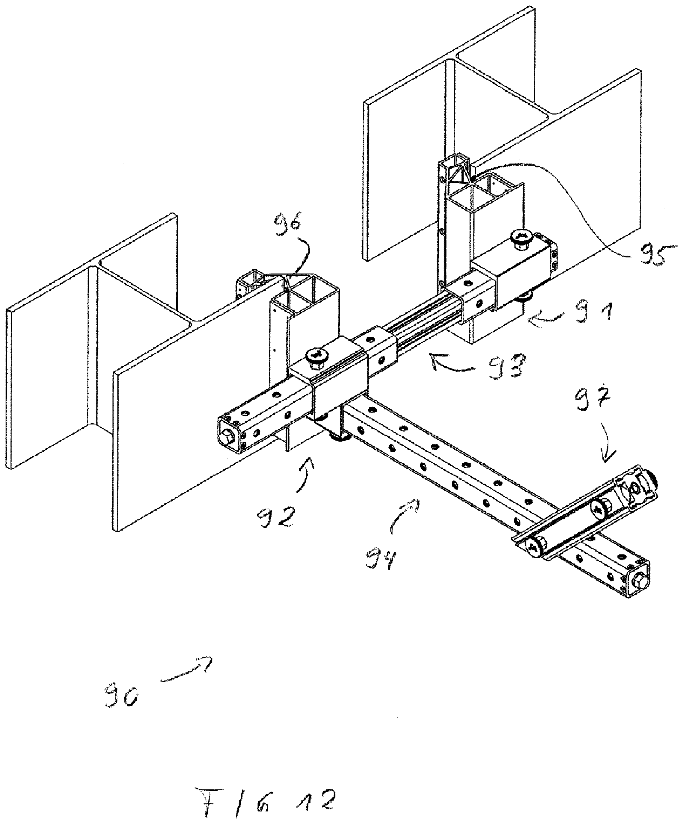

Figur 12 zeigt eine perspektivische Darstellung des modularen Haltesystems gemäß einer weiteren Ausführungsform 90. Das Haltesystem umfasst ein erstes Anschlagmodul 91, ein zweites Anschlagmodul 92, eine erste Spannkonsole 93, eine zweite Spannkonsole 94 und einen Rohradapter 97.

Das Haltesystem ist in einer Pressstellung zwischen geeigneten Aufnahmekanten von Strahlprofilteilen fixiert. Zu diesem Zweck werden die Anschlagmodule 91, 92 derart ausgerichtet, dass die Aufnahmekanten des Stahlprofilteils in die jeweiligen Vertiefungen 95, 96, welche sich an die Hauptanpressfläche des jeweiligen Anschlagmoduls 91, 92 anschließen, greifen. Durch das Konzept einer sich verjüngenden Vertiefung, richten sich die Anschlagmodule in definierter Weise an den Stahlprofilteilen aus. Somit ist beim Erzeugen einer Pressstellung mittels des Anziehens der Spindelschrauben, eine sichere Fixierung auf besonders vorteilhafte Weise gewährleistet. Eine Klemmstellung um geeignete Aufnahmekanten herum ist gemäß obiger Ausführung in analoger Weise realisierbar.

Der Rohradapter 97 in Figur 12 soll beispielhaft andeuten wie ein Sicherungsbaugruppenteil mit Hilfe des modularen Haltesystems 90 an dem Aufnahmekörper nutzbar gemacht werden kann. Der Rohradapter 97 ist mit Hilfe der Federriegel, die in gegenüberliegenden Aussparungen der Spannkonsole 94 eingerastet sind, arretiert. Nun könnte beispielsweise ein Sicherungsbaugruppen-Rundrohr in die im Wesentlichen kreisrunde Aussparung des Rohradapters 97 eingeführt werden. Die Spannkonsole 94, die sich durch eine der Steckführungen des Rohradapters 97 hindurch erstreckt, würde als Anschlag für das Sicherungsbaugruppen-Rundrohr dienen.

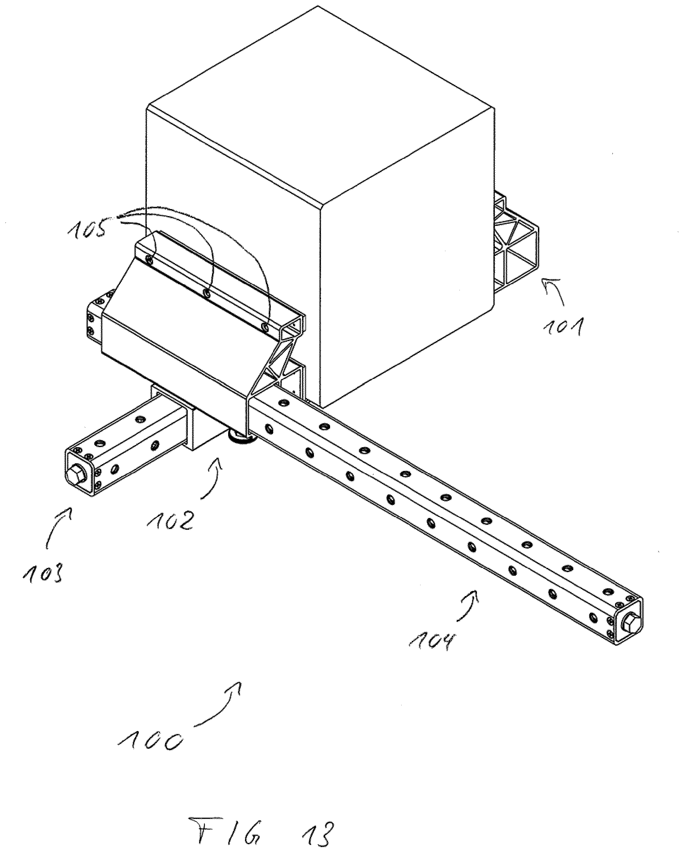

Figur 13 zeigt eine perspektivische Darstellung des modularen Haltesystems gemäß einer weiteren Ausführungsform 100. Das Haltesystem umfasst ein erstes Anschlagmodul 101, ein zweites Anschlagmodul 102, eine erste Spannkonsole 103 und eine zweite Spannkonsole 104.

Das modulare Haltesystem 100 ist hier in einer Klemmstellung unterhalb eines Aufnahmekörpers fixiert. Die Durchgangslöcher, die durch die Hauptanschlagflächen 105 der Anschlagmodule 101, 102 ausgeführt sind, können nun als zusätzliche Fixierungsmöglichkeit mittels geeigneter Schraubverbindungen gegenüber dem Aufnahmekörper genutzt werden. Dies ermöglicht einen zusätzlichen Sicherungsmechanismus des modularen Haltesystems 100, der insbesondere für eine hängende Montagestellung des modularen Haltesystems 100 gemäß der vorliegenden Ausführungsform von Interesse ist.

Das modulare Haltesystem ist für die Verwendung mit unterschiedlichsten Aufnahmekörpern konzipiert. Das modulare Haltesystem kann mit Spannkonsolen unterschiedlicher minimaler Gesamtlänge benutzt werden. Aus diesem Grund umfasst die Spannkonsole verschiedene Ausführungsformen, die sich in den grundsätzlichen Abmessungen, mit Ausnahme der minimalen Gesamtlänge, gleichen. Die minimale Gesamtlänge beträgt vorteilhaft mehr als 100 mm. Weiter vorteilhaft beträgt die minimale Gesamtlänge der Spannkonsole weniger als 4000 mm. Die minimale Gesamtlänge der Spannkonsole kann weiter vorteilhaft 560 mm, 910 mm oder 1120 mm betragen. Dadurch stellt das modulare Haltesystem die Möglichkeit bereit, unterschiedliche Klemm- bzw. Pressabstände bedienen zu können. Somit ist das modulare Haltesystem variabel einsetzbar. Es stellt vielfältige Möglichkeiten zur Verfügung, Klemm- bzw. Pressstellungen innerhalb eines weiten Distanzbereichs zu ermöglichen. Falls die Anwendungsgebiete es erforderlich machen, können die Einzelkomponenten des modularen Haltesystems natürlich weiter variiert werden, indem Kantenlängen, Wandstärken, etc. angepasst werden.

Es ist von besonderem Interesse, die Elemente, die der Aufnahme einer Sicherungsbaugruppe dienen, einerseits widerstandsfähig, andererseits aber auch mit möglichst geringem Gewicht zu konzipieren. Dadurch werden die Belastungen während der Montage verringert und Kosteneinsparungen während des Transports ermöglicht. Aus diesem Grund bestehen die einzelnen Elemente des modularen Haltesystems, also die Spannkonsole, das Anschlagmodul und der Rohradapter, im Wesentlichen aus einer Aluminiumlegierung. Derartige Legierungen weisen, gegenüber einer Stahl-basierten Ausführungsweise, eine signifikante Gewichtsersparnis, bei strukturell vergleichbaren oder teilweise auch verbesserten Eigenschaften, wie beispielsweise Formbarkeit oder Korrosionsbeständigkeit, auf.

Die Erfindung wurde im Vorangehenden zwar anhand besonderer Ausführungsformen beschrieben, sie ist jedoch nicht auf diese Ausführungsformen beschränkt, und der Fachmann wird zweifellos weitere Alternativen finden, die im Umfang der Erfindung, wie sie beansprucht ist, liegen.

## Patentansprüche

1. Modulares Haltesystem (80, 90, 100), das wenigstens eine Spannkonsole (1) und wenigstens ein Anschlagmodul (30, 50, 60) umfasst,
die Spannkonsole umfassend: zwei Deckelhülsen (2, 3), ein Innenelement (4) und ferner zwei Spindelschrauben (9), wobei die Spindelschrauben (9) koaxial einer Längserstreckungsachse der Spannkonsole (1) an gegenüberliegenden Enden der Spannkonsole (1) angeordnet sind, wobei mittels einer Rotation der jeweiligen Spindelschraube (9) eine Relativbewegung der jeweiligen Deckelhülse (2, 3) gegenüber dem Innenelement (4) entlang der Längserstreckungsachse der Spannkonsole (1) ausführbar ist, so dass eine Gesamtlänge der Spannkonsole (1) entlang der Längserstreckungsachse veränderbar ist, wobei jede Deckelhülse (2,3) Seitenflächen mit Aussparungen (17) aufweist,
das Anschlagmodul (30) umfassend: eine Hauptanpressfläche (32), eine wenigstens erste Steckführung (31) und einen wenigstens ersten Federriegel (35) an einer Außenwand der Steckführung (31), wobei eine Längsachse der Steckführung (31) im Wesentlichen orthogonal zu der Hauptanpressfläche (32) orientiert ist, und wobei ein Bolzen des wenigstens ersten Federriegels (35) in einen Innenraum der Steckführung (31) verfahrbar ist,
sodass die Spannkonsole in die erste Steckführung (31) eingeführt und dort mittels des Bolzens, der in eine der Aussparungen (17) in einer der Seitenflächen, die in eine der Deckelhülsen einrastet, arretiert werden kann.

2. Modulares Haltesystem (80, 90, 100) gemäß Anspruch 1, wobei die jeweilige Spindelschraube (9) am jeweiligen Ende der Spannkonsole (1) drehbar mit einer Stirnseite einer Deckelhülse (2, 3) verbunden ist.

3. Modulares Haltesystem (80, 90, 100) gemäß den Ansprüchen 1 oder 2, wobei das Innenelement (4) zwei Spindelbuchsen (22) umfasst, wobei die Spindelbuchsen koaxial einer Längserstreckungsachse des Innenelements (4) an gegenüberliegenden Enden des Innenelements (4) angeordnet sind, wobei die Spindelbuchsen (22) jeweils ein Innengewinde (25) umfassen, und wobei die Spindelschrauben (9) in die Innengewinde (25) geschraubt sind.

4. Modulares Haltesystem (80, 90, 100) gemäß einem der Ansprüche 1 bis 3, wobei das Innenelement (4) wenigstens zwei Sicherungselemente (24) aufweist, wobei ferner jede Deckelhülse (2, 3) ein zu den beiden ersten Sicherungselementen (24) komplementäres weiteres Sicherungselement (16) aufweist, und wobei eine maximale Gesamtlänge der Spannkonsole (1) entlang der Längserstreckungsachse durch ein Zusammenwirken der beiden ersten Sicherungselemente (24) mit den komplementären weiteren Sicherungselementen (16) limitierbar ist.

5. Modulares Haltesystem (80, 90, 100) gemäß einem der Ansprüche 1 bis 4, wobei die Deckelhülsen (2, 3) und/oder das Innenelement (4) im Wesentlichen aus einer Aluminiumlegierung bestehen.

6. Modulares Haltesystem (80, 90, 100) gemäß einem der Ansprüche 1 bis 5, wobei das Anschlagmodul (30) ferner eine Vertiefung (33) umfasst, wobei sich die Vertiefung (33) an die Hauptanpressfläche (32) anschließt, wobei die Vertiefung (33) im Wesentlichen eine erste Wandfläche (38) und eine zweite Wandfläche (39) umfasst, und wobei sich eine Distanz zwischen der ersten (38) und der zweiten Wandfläche (39) mit einem zunehmendem Abstand von einer Ebene der Hauptanpressfläche (32) verringert.

7. Modulares Haltesystem (80, 90, 100) gemäß einem der Ansprüche 1 bis 6, wobei das Anschlagmodul (30) ein Fachwerk (41) umfasst, wobei das Fachwerk (41) zusätzliche Zwischenwände einer doppelwandigen Struktur des Anschlagmoduls umfasst, wobei die Zwischenwände normal zu Stirnflächen des Anschlagmoduls orientiert sind, wobei sich die Zwischenwände über eine Gesamtlänge des Anschlagmoduls erstrecken, wobei sich die Zwischenwände im Wesentlichen von Eckpunkten der Verjüngung an eine jeweils gegenüberliegende Wand erstrecken, um eine strukturelle Stabilität des Anschlagmoduls (30) zu erhöhen.

8. Modulares Haltesystem (80, 90, 100) gemäß einem der Ansprüche 1 bis 7, wobei die Hauptanpressfläche (32) ein Pufferelement (36) umfasst, wobei das Pufferelement (36) aus einem elastisch verformbaren Material besteht, so dass eine gleichmäßige Kraftverteilung auf der Hauptanpressfläche (32) erzielbar ist.

9. Modulares Haltesystem (80, 90, 100) gemäß einem der Ansprüche 1 bis 8, wobei das Anschlagmodul einen Anschlagpunkt (85) zur Absturzsicherung von Personen umfasst.

10. Modulares Haltesystem (80, 90, 100) gemäß einem der Ansprüche 1 bis 9, wobei das Anschlagmodul (50) eine zweite Steckführung (51) und einen zweiten Federriegel (35) an einer Außenwand der zweiten Steckführung (51) umfasst, und wobei ein Bolzen des zweiten Federriegels (35) in einen Innenraum der zweiten Steckführung (51) bewegbar ist.

11. Modulares Haltesystem (80, 90, 100) gemäß einem der Ansprüche 1 bis 10, wobei das Anschlagmodul (30, 50, 60) im Wesentlichen aus einer Aluminiumlegierung besteht.

12. Verfahren zum Erzeugen einer Klemmstellung eines modularen Haltesystems (80, 90, 100) nach einem der Ansprüche 1 bis 11, wobei das Verfahren die folgenden Schritte umfasst:
a) Ausrichten eines ersten und eines zweiten Anschlagmoduls (30), so dass Hauptanpressflächen (32) des ersten Anschlagmoduls (30) und des zweiten Anschlagmoduls (30) aufeinander zu gerichtet sind und Steckführungen (31) des ersten Anschlagmoduls (30) und des zweiten Anschlagmoduls (30) in Flucht zueinander ausgerichtet sind,
b) Zurückziehen von Federriegeln (35), die an Außenwänden der Steckführungen (31) des ersten Anschlagmoduls (30) und des zweiten Anschlagmoduls (30) montiert sind, so dass ein jeweiliger Bolzen des jeweiligen Federriegels (35) eine Öffnungsfläche der jeweiligen Steckführung (31) nicht mehr beschränkt,
c) Rotieren von Spindelschrauben (9), die an entlang einer Längserstreckungsachse gegenüberliegenden Enden einer Spannkonsole (1) positioniert sind, so dass eine Gesamtlänge der Spannkonsole (1) maximal wird,
d) Einführen der Spannkonsole (1) in die in Flucht ausgerichteten Steckführungen (31) des ersten und zweiten Anschlagmoduls (30),
e) Loslassen der Federriegel (35), die an den Außenwänden der Steckführungen (31) des ersten und zweiten Anschlagmoduls (30) montiert sind, so dass die Federriegel (35) in Ausschnitten (17) der Spannkonsole (1) derart einrasten, dass eine Differenz zwischen einer maximalen Gesamtlänge der Spannkonsole (1) und einer minimalen Gesamtlänge der Spannkonsole (1) entlang der Längserstreckungsachse größer ist, als eine Längenänderung der Spannkonsole (1), die zum Erzeugen einer Klemmstellung benötigt wird,
f) Rotieren der beiden Spindelschrauben (9) bis eine Klemmstellung erreicht wird.

13. Verfahren zum Erzeugen einer Pressstellung eines modularen Haltesystems (80, 90, 100) nach einem der Ansprüche 1 bis 11, wobei das Verfahren die folgenden Schritte umfasst:
a) Ausrichten eines ersten und eines zweiten Anschlagmoduls (30), so dass Hauptanpressflächen (32) des ersten Anschlagmoduls (30) und des zweiten Anschlagmoduls (30) voneinander weg gerichtet sind und Steckführungen (31) des ersten Anschlagmoduls (30) und des zweiten Anschlagmoduls (30) in Flucht zueinander ausgerichtet sind,
b) Zurückziehen von Federriegeln (35), die an Außenwänden der Steckführungen (31) des ersten Anschlagmoduls (30) und des zweiten Anschlagmoduls (30) montiert sind, so dass ein jeweiliger Bolzen des jeweiligen Federriegels (35) eine Öffnungsfläche der jeweiligen Steckführung (31) nicht mehr beschränkt,
c) Rotieren von Spindelschrauben (9), die an entlang einer Längserstreckungsachse gegenüberliegenden Enden einer Spannkonsole (1) positioniert sind, so dass eine Gesamtlänge der Spannkonsole (1) minimal wird,
d) Einführen der Spannkonsole (1) in die in Flucht ausgerichteten Steckführungen (31) des ersten und zweiten Anschlagmoduls (30),
e) Loslassen der Federriegel (35), die an den Außenwänden der Steckführungen (31) des ersten und zweiten Anschlagmoduls (30) montiert sind, so dass die Federriegel (35) in Ausschnitten (17) der Spannkonsole (1) derart einrasten, dass eine Differenz zwischen einer maximalen Gesamtlänge der Spannkonsole (1) und einer minimalen Gesamtlänge der Spannkonsole (1) entlang der Längserstreckungsachse größer ist, als eine Längenänderung der Spannkonsole (1), die zum Erzeugen einer Pressstellung benötigt wird,
f) Rotieren der beiden Spindelschrauben (9) bis eine Pressstellung erreicht wird.

## Claims

1. A modular retaining system (80, 90, 100) which comprises at least one clamping bracket (1) and at least one attachment module (30, 50, 60),
the clamping bracket comprising: two cover sleeves (2, 3), an inner element (4) and furthermore two spindle screws (9), wherein the spindle screws (9) are arranged coaxially with a longitudinal extension axis of the clamping bracket (1) at opposite ends of the clamping bracket (1), wherein a relative movement of the respective cover sleeve (2, 3) in relation to the inner element (4) is executable along the longitudinal extension axis of the clamping bracket (1) by means of a rotation of the respective spindle screw (9), so that an overall length of the clamping bracket (1) is variable along the longitudinal extension axis, wherein each cover sleeve (2, 3) has side surfaces with recesses (17),
the attachment module (30) comprising: a main contact pressure surface (32), an at least first insertion guide (31) and an at least first locking bar (35) on an outer wall of the insertion guide (31), wherein a longitudinal axis of the insertion guide (31) is oriented substantially orthogonally to the main contact pressure surface (32), and wherein a pin of the at least first locking bar (35) is movable into an interior space of the insertion guide (31),
so that the clamping bracket can be introduced into the first insertion guide (31) and locked in place there by means of the pin which latches into one of the recesses (17) in one of the side surfaces in one of the cover sleeves.

2. The modular retaining system (80, 90, 100) according to claim 1, wherein the respective spindle screw (9) at the respective end of the clamping bracket (1) is rotatably connected to a face side of a cover sleeve (2, 3).

3. The modular retaining system (80, 90, 100) according to claim 1 or 2, wherein the inner element (4) comprises two spindle bushings (22), wherein the spindle bushings are arranged coaxially with a longitudinal extension axis of the inner element (4) at opposite ends of the inner element (4), wherein the spindle bushings (22) each comprise an internal thread (25), and wherein the spindle screws (9) are screwed into the internal threads (25).

4. The modular retaining system (80, 90, 100) according to any of claims 1 to 3, wherein the inner element (4) includes at least two retaining elements (24), wherein further each cover sleeve (2, 3) includes a further retaining element (16) complementary to the two first retaining elements (24), and wherein a maximum overall length of the clamping bracket (1) along the longitudinal extension axis is limitable by a cooperation of the two first retaining elements (24) with the complementary further retaining elements (16).

5. The modular retaining system (80, 90, 100) according to any of claims 1 to 4, wherein the cover sleeves (2, 3) and/or the inner element (4) consist essentially of an aluminum alloy.

6. The modular retaining system (80, 90, 100) according to any of claims 1 to 5, wherein the attachment module (30) further comprises a depression (33), wherein the depression (33) adjoins the main contact pressure surface (32), wherein the depression (33) essentially comprises a first wall surface (38) and a second wall surface (39), and wherein a distance between the first (38) and second wall surfaces (39) decreases as a distance from a plane of the main contact pressure surface (32) increases.

7. The modular retaining system (80, 90, 100) according to any of claims 1 to 6, wherein the attachment module (30) comprises a truss (41), the truss (41) comprising additional intermediate walls of a double-walled structure of the attachment module, the intermediate walls being oriented normal to end faces of the attachment module, the intermediate walls extending over an overall length of the attachment module, the intermediate walls essentially extending from corner points of the taper to a respectively opposite wall to increase a structural stability of the attachment module (30).

8. The modular retaining system (80, 90, 100) according to any of claims 1 to 7, wherein the main contact pressure surface (32) comprises a buffer element (36), the buffer element (36) consisting of an elastically deformable material, so that a uniform force distribution on the main contact pressure surface (32) is achievable.

9. The modular retaining system (80, 90, 100) according to any of claims 1 to 8, wherein the attachment module comprises an attachment point (85) for fall protection of persons.

10. The modular retaining system (80, 90, 100) according to any of claims 1 to 9, wherein the attachment module (50) comprises a second insertion guide (51) and a second locking bar (35) on an outer wall of the second insertion guide (51), and wherein a pin of the second locking bar (35) is adapted to be moved into an interior space of the second insertion guide (51).

11. The modular retaining system (80, 90, 100) according to any of claims 1 to 10, wherein the attachment module (30, 50, 60) consists essentially of an aluminum alloy.

12. A method of producing a clamping position of a modular retaining system (80, 90, 100) according to any of claims 1 to 11, the method comprising the following steps:
(a) aligning a first and a second attachment module (30) so that main contact pressure surfaces (32) of the first attachment module (30) and of the second attachment module (30) are directed to face each other and insertion guides (31) of the first attachment module (30) and of the second attachment module (30) are oriented in alignment with each other,
(b) retracting locking bars (35) that are mounted on outer walls of the insertion guides (31) of the first attachment module (30) and of the second attachment module (30), so that a respective pin of the respective locking bar (35) no longer restricts an opening area of the respective insertion guide (31),
(c) rotating spindle screws (9) that are positioned at ends of a clamping bracket (1) opposite each other along a longitudinal extension axis, so that an overall length of the clamping bracket (1) becomes maximum,
(d) introducing the clamping bracket (1) into the insertion guides (31), oriented in alignment, of the first and second attachment modules (30),
(e) releasing the locking bars (35) that are mounted on the outer walls of the insertion guides (31) of the first and second attachment modules (30), so that the locking bars (35) latch into cutouts (17) of the clamping bracket (1) in such a way that a difference between a maximum overall length of the clamping bracket (1) and a minimum overall length of the clamping bracket (1) along the longitudinal extension axis is greater than a change in length of the clamping bracket (1) necessary to generate a clamping position,
(f) rotating the two spindle screws (9) until a clamping position is reached.

13. A method of producing a pressing position of a modular retaining system (80, 90, 100) according to any of claims 1 to 11, the method comprising the following steps:
(a) aligning a first and a second attachment module (30) so that main contact pressure surfaces (32) of the first attachment module (30) and of the second attachment module (30) are directed to face away from each other and insertion guides (31) of the first attachment module (30) and of the second attachment module (30) are oriented in alignment with each other,
(b) retracting locking bars (35) that are mounted on outer walls of the insertion guides (31) of the first attachment module (30) and of the second attachment module (30), so that a respective pin of the respective locking bar (35) no longer restricts an opening area of the respective insertion guide (31),
(c) rotating spindle screws (9) that are positioned at ends of a clamping bracket (1) opposite each other along a longitudinal extension axis, so that an overall length of the clamping bracket (1) becomes minimum,
(d) introducing the clamping bracket (1) into the insertion guides (31), oriented in alignment, of the first and second attachment modules (30),
(e) releasing the locking bars (35) that are mounted on the outer walls of the insertion guides (31) of the first and second attachment modules (30), so that the locking bars (35) latch into cutouts (17) of the clamping bracket (1) in such a way that a difference between a maximum overall length of the clamping bracket (1) and a minimum overall length of the clamping bracket (1) along the longitudinal extension axis is greater than a change in length of the clamping bracket (1) necessary to generate a pressing position,
(f) rotating the two spindle screws (9) until a pressing position is reached.

## Revendications

1. Système de retenue modulaire (80, 90, 100) comprenant au moins une console de serrage (1) et au moins un module d'accrochage (30, 50, 60),
la console de serrage comprenant : deux douilles de recouvrement (2, 3), un élément intérieur (4), et en outre deux vis de broches (9), les vis de broche (9) étant agencées de manière coaxiale par rapport à un axe d'extension longitudinale de la console de serrage (1) à des extrémités opposées de la console de serrage (1), un mouvement relatif de la douille de recouvrement (2, 3) respective par rapport à l'élément intérieur (4) le long de l'axe d'extension longitudinale de la console de serrage (1) étant apte à être effectué par une rotation de la vis de broche (9) respective, de sorte qu'une longueur totale de la console de serrage (1) peut être modifiée le long de l'axe d'extension longitudinale, chaque douille de recouvrement (2, 3) présentant des faces latérales qui présentent des évidements (17),
le module d'accrochage (30) comprenant : une surface de pression principale (32), un au moins premier guidage d'insertion (31) et un au moins premier verrou à ressort (35) sur une paroi extérieure du guidage d'insertion (31), un axe longitudinal du guidage d'insertion (31) étant orienté de manière sensiblement orthogonale à la surface de pression principale (32), et un boulon dudit au moins premier verrou à ressort (35) étant apte à être déplacé dans un espace intérieur du guidage d'insertion (31),
de sorte que la console de serrage est insérée dans le guidage d'insertion (31) et peut y être arrêtée au moyen du boulon qui s'enclenche dans l'un des évidements (17) dans l'une des faces latérales dans l'une des douilles de recouvrement.

2. Système de retenue modulaire (80, 90, 100) selon la revendication 1, la vis de broche (9) respective étant liée en rotation à une face frontale d'une douille de recouvrement (2, 3) à l'extrémité respective de la console de serrage (1).

3. Système de retenue modulaire (80, 90, 100) selon la revendication 1 ou 2, l'élément intérieur (4) comprenant deux bagues de broche (22), les bagues de broche étant agencées de manière coaxiale par rapport à un axe d'extension longitudinale de l'élément intérieur (4) à des extrémités opposées de l'élément intérieur (4), les bagues de broche (22) comprenant chacune un taraudage (25), et les vis de broche (9) étant vissées dans les taraudages (25).

4. Système de retenue modulaire (80, 90, 100) selon l'une des revendications 1 à 3, l'élément intérieur (4) présentant au moins deux éléments de blocage (24), chaque douille de recouvrement (2, 3) présentant en outre un élément de blocage supplémentaire (16) qui est complémentaire aux deux premiers éléments de blocage (24), et une longueur totale maximale de la console de serrage (1) le long de l'axe d'extension longitudinale étant apte à être limitée par une coopération des deux premiers éléments de blocage (24) avec les éléments de blocage supplémentaires (16) complémentaires.

5. Système de retenue modulaire (80, 90, 100) selon l'une des revendications 1 à 4, les douilles de recouvrement (2, 3) et/ou l'élément intérieur (4) étant sensiblement réalisés en un alliage d'aluminium.

6. Système de retenue modulaire (80, 90, 100) selon l'une des revendications 1 à 5, le module d'accrochage (30) comprenant en outre un creux (33), le creux (33) se raccordant à la surface de pression principale (32), le creux (33) comprenant sensiblement une première surface de paroi (38) et une deuxième surface de paroi (39), et une distance entre la première (38) et la deuxième surface de paroi (39) diminuant avec une distance croissante d'un plan de la surface de pression principale (32).

7. Système de retenue modulaire (80, 90, 100) selon l'une des revendications 1 à 6, le module d'accrochage (30) comprenant un colombage (41), le colombage (41) comprenant des parois intermédiaires supplémentaires d'une structure à deux parois du module d'accrochage, les parois intermédiaires étant orientées normalement par rapport aux faces frontales du module d'accrochage, les parois intermédiaires s'étendant sur une longueur totale du module d'accrochage, les parois intermédiaires s'étendant sensiblement à partir de points d'angle du rétrécissement sur une paroi respectivement opposée pour augmenter une stabilité structurelle du module d'accrochage (30).

8. Système de retenue modulaire (80, 90, 100) selon l'une des revendications 1 à 7, la surface de pression principale (32) comprenant un élément tampon (36), l'élément tampon (36) étant réalisé en une matière élastiquement déformable de sorte d'une distribution de force uniforme sur la surface de pression principale (32) peut être obtenue.

9. Système de retenue modulaire (80, 90, 100) selon l'une des revendications 1 à 8, le module d'accrochage comprenant un point d'accrochage (85) pour une protection contre les chutes de personnes.

10. Système de retenue modulaire (80, 90, 100) selon l'une des revendications 1 à 9, le module d'accrochage (50) comprenant un deuxième guidage d'insertion (51) et un deuxième verrou à ressort (35) sur une paroi extérieure du deuxième guidage d'insertion (51), et un boulon du deuxième verrou à ressort (35) étant apte à être déplacé dans un espace intérieur du deuxième guidage d'insertion (51).

11. Système de retenue modulaire (80, 90, 100) selon l'une des revendications 1 à 10, le module d'accrochage (30, 50, 60) étant sensiblement réalisé en un alliage d'aluminium.

12. Procédé de génération d'une position de serrage d'un système de retenue modulaire (80, 90, 100) selon l'une des revendications 1 à 11, le procédé comprenant les étapes suivantes :
a) orientation d'un premier et d'un deuxième module d'accrochage (30) de sorte que des surfaces de pression principales (32) du premier module d'accrochage (30) et du deuxième module d'accrochage (30) sont orientées les unes vers les autres et des guidages d'insertion (31) du premier module d'accrochage (30) et du deuxième module d'accrochage (30) sont orientés en alignement les uns sur les autres,
b) retraite de verrous à ressort (35) qui sont montés sur des parois extérieures des guidages d'insertion (31) du premier module d'accrochage (30) et du deuxième module d'accrochage (30), de sorte qu'un boulon respectif du verrou à ressort respectif (35) ne limite plus une surface d'ouverture du guidage d'insertion respectif (31),
c) rotation de vis de broche (9) qui sont positionnées à des extrémités d'une console de serrage (1) qui sont opposées le long d'un axe d'extension longitudinale de sorte qu'une longueur totale de la console de serrage (1) devient maximale,
d) insertion de la console de serrage (1) dans les guidages d'insertion (31) orientés en alignement les uns sur les autres du premier et du deuxième module d'accrochage (30),
e) relâchement des verrous à ressort (35) qui sont montés sur les parois extérieures des guidages d'insertion (31) du premier et du deuxième module d'accrochage (30), de sorte que les verrous à ressort (35) s'enclenchent dans des découpes (17) de la console de serrage (1) de telle sorte qu'une différence entre un longueur totale maximale de la console de serrage (1) et une longueur totale minimale de la console de serrage (1) le long de l'axe d'extension longitudinale est supérieure à un changement de longueur de la console de serrage (1) nécessaire pour la génération d'une position de serrage,
f) rotation des deux vis de broche (9) jusqu'à ce qu'une position de serrage est atteinte.

13. Procédé de génération d'une position de pression d'un système de retenue modulaire (80, 90, 100) selon l'une des revendications 1 à 11, le procédé comprenant les étapes suivantes :
a) orientation d'un premier et d'un deuxième module d'accrochage (30) de sorte que des surfaces de pression principales (32) du premier module d'accrochage (30) et du deuxième module d'accrochage (30) sont orientées en éloignement les unes des autres et des guidages d'insertion (31) du premier module d'accrochage (30) et du deuxième module d'accrochage (30) sont orientés en alignement les uns sur les autres,
b) retraite de verrous à ressort (35) qui sont montés sur des parois extérieures des guidages d'insertion (31) du premier module d'accrochage (30) et du deuxième module d'accrochage (30), de sorte qu'un boulon respectif du verrou à ressort respectif (35) ne limite plus une surface d'ouverture du guidage d'insertion respectif (31),
c) rotation de vis de broche (9) qui sont positionnées à des extrémités d'une console de serrage (1) qui sont opposées le long d'un axe d'extension longitudinale de sorte qu'une longueur totale de la console de serrage (1) devient minimale,
d) insertion de la console de serrage (1) dans les guidages d'insertion (31) orientés en alignement les uns sur les autres du premier et du deuxième module d'accrochage (30),
e) relâchement des verrous à ressort (35) qui sont montés sur les parois extérieures des guidages d'insertion (31) du premier et du deuxième module d'accrochage (30), de sorte que les verrous à ressort (35) s'enclenchent dans des découpes (17) de la console de serrage (1) de telle sorte qu'une différence entre un longueur totale maximale de la console de serrage (1) et une longueur totale minimale de la console de serrage (1) le long de l'axe d'extension longitudinale est supérieure à un changement de longueur de la console de serrage (1) nécessaire pour la génération d'une position de serrage,
f) rotation des deux vis de broche (9) jusqu'à ce qu'une position de serrage est atteinte.
